# EUROPEAN PATENT SPECIFICATION

(11) **EP 2 441 728 B1**
(45) Date of publication and mention of the grant of the patent: **03.06.2015**
(21) Application number: 11185267.9
(22) Date of filing: 14.10.2011
(51) Int. Cl.: B66F 9/02, B65G 65/23, B28C 5/08, B28C 7/08, B28C 9/00, B28C 7/04

(54) **Mixing tower and process for the production of conglomerates, particularly for the production of concrete or bituminous conglomerates**
Mischstation und Verfahren zur Herstellung eines Konglomerats, insbesondere zur Herstellung von Beton- ou Bitumenkonglomeraten
Poste de mélange et Procédé pour la fabrication d'un materiau conglomeré, en particulier pour la préparation de conglomérats de béton ou conglomérats bitumineux

(30) Priority: 15.10.2010 IT MI20101897
(43) Date of publication of application: 18.04.2012
(73) Proprietor: Mauro Service Impianti Srl, 24050 Zanica (Bergamo) (IT); PMB Engineering Srl, 20092 Cinisello Balsamo (Milano) (IT); Donvito, Antonio, 20099 Sesto San Giovanni (Milano) (IT)
(72) Inventor: Donvito, Antonio, I-20099 SESTO SAN GIOVANNI (MILANO) (IT)
(74) Representative: Sutto, Luca

(56) References cited:
- EP-A1- 0 553 048
- DE-A1- 19 710 936
- DE-U1- 29 620 408
- US-A- 3 380 603
- US-A- 5 582 500

## Description

### FIELD OF THE INVENTION

The present invention relates to a mixing tower and a process for production of conglomerates, in particular cement conglomerates or asphalt conglomerates. For example, the system of the invention can be used for loading aggregate materials such as sand, cement conglomerates, gravel and other materials, typically used in the civil construction field, for mixing thereof in a mixer predisposed such as to receive cements and/or asphalt and/or additives such as to form a conglomerate on a transport vehicle, such as a truck or a cement mixer.

### PRIOR ART

As is known, the market offers loading systems for moving material towards a chamber of a transporter vehicle, for example a mobile cement mixer.

For example a known embodiment includes the use of a loading system comprising a supporting structure bearing a mixer. The mixer receives one or more materials and, after a mixing step, releases them to an underlying hopper which transports the material into the collecting chamber of a mobile cement mixer.

The described solution is subject to an uncontrolled loading of material in outlet from the mixer which can determine partial or total blocking of the flow of material into the conveyor hopper. This problem causes the interruption of the loading step of the plant, which influences the total loading time and consequently has an impact on operating costs. At present, should the loading hopper clog up, an operator has to intervene to free up the hopper from the material present therein. The freeing-up of the hopper is a quite complex operation. Furthermore, the operator's intervention leads to an increase in costs.

DE 197 10 936 A1 discloses a mixing tower for production of conglomerates, in particular cement conglomerates or asphalt conglomerates, comprising:
a lifting and unloading system, comprising:
   - at least a supporting structure which extends along a prevalent development direction and which exhibits a base and an upper zone,
   - at least a containing element for loading the material,
   - at least a first and a second drawing element engaged with the containing element and configured such as to move the containing element along a predetermined operating pathway extending between at least the base and the upper zone,
   - movement means associated to the supporting structure such as to impart the motion on the drawing elements, enabling displacement of the containing element, along the operating pathway, said movement means and said drawing elements being configured and coupled in such a way that during movement of the containing element said movement means engage and release successive segments of the drawing element;
   - at least a mixer borne by the supporting structure, the mixer comprising at least a containing body,
   - at least a general inlet for receiving the material from the containing body when the containing body is in the upper zone above the general opening,
   - at least a general outlet for the unloading of the material; and
   - at least a hopper underlying the mixer and exhibiting at least an inlet in fluid connection with the general outlet of the mixer,
   - at least an outlet which enables unloading of material from the hopper.

### AIM OF THE INVENTION

A first aim of the present invention is to resolve one or more of the limitations and drawbacks of the preceding solutions.

A further aim of the invention is to make the loading system reliable and to prevent any overloads in the hopper.

A further aim is to reduce the down-times of the plant to a minimum.

An additional aim is to provide and automated system with excellent efficiency and which during the loading step reduces labour costs to a minimum and makes the use of the plant available to all.

### SUMMARY

At least one of the above-specified aims is substantially attained by a mixing tower according to claim 1 and a loading and lifting process according to claims 16 and 17. Further aspects are described herein below.

A 1st aspect relates to a lifting and optionally an unloading system, in particular of aggregate materials, for loading plants, the system comprising at least a supporting structure which extends along a prevalent development description and exhibits a base and an upper zone, at least a containing element for loading the material, at least a drawing element engaged with the containing element and configured such as to move the containing element along a predetermined operating pathway, movement means associated to the supporting structure such as to impart motion on the drawing element, enabling displacement of the containing element in which the movement means and the drawing element are configured and coupled such that during the movement of the containing element the movement means engage and release successive segments of the drawing elements.

In a 2nd aspect, according to the 1st, the drawing element defines a contact zone with the movement means.

In a 3rd aspect, according to any one of the preceding aspects, the drawing element defines a contact zone with the movement means exhibiting a surface having a substantially constant area during the movement of the containing element. In other words, the movement means exhibit, for example, a rotating organ (such as a pinion, a cogged crown wheel, a cogged wheel) destined to transmit the motion to the drawing element; the rotating organ being constantly engaged on the drawing element in a zone of reciprocal contact of constant dimensions during the movement; in practice the drawing element not progressively winding on the rotating organ.

In a 4th aspect, according to any one of the preceding aspects, the contact zone extends from an engaging point to a release point with the movement means, for example from an engaging point to a release point defined peripherally to the rotating organ.

In a 5th aspect, according to any one of the preceding aspects, the drawing element has an elongate conformation. In practice, the longitudinal extension of the elongate element is enormously greater than the transversal dimensions thereof.

In a 6th aspect, according to the preceding aspect, the drawing element comprises a first portion engaged with the containing element. The engagement must be such as to enable raising of the containing element when fully loaded. In a 7th aspect, according to any one of the preceding aspects, the system exhibits a counter-weight associated to the drawing element and arranged such as at least partially to counter-balance the weight of the containing element. In an 8th aspect, according to any one of the preceding claims, the system exhibits a counter-weight engaged with a second portion of the drawing element, the contact zone developing in a tract of the drawing element that is intermediate between the first and the second portion.

In a 9th aspect according to the preceding aspect, the successive segments comprise intermediate portions of the drawing element comprised between the first and the second portion.

In a 10th aspect according to any one of the preceding aspects, the movement means comprise at least a motor, at least a transmission organ connected to the motor such as to transmit the motion to the transmission organ, at least a driven organ (for example the rotating organ) connected to the transmission organ and active on the drawing element. Alternatively the motor could be directly keyed onto the driven organ.

In an 11th aspect, according to the preceding aspect, the motor is configured such as to transmit a circular motion exhibiting a main rotation axis in such a way that the driven organ can in turn rotate and transmit the motion to the driven organ that, as has been mentioned, can comprise a cogged crown wheel, or a pinion, or a gearing or another rotating organ able to engage the drawing organ.

In a 12th aspect, according to any one of the preceding aspects, the drawing element is configured such as to have one or more of the portions thereof with radii of curvature of less than 300mm. In practice, a part of the drawing element is joined to the perimeter of the driven organ which is a part of the movement means.

In a 13th aspect according to any one of the preceding aspects, the driven organ comprises a rotating element, for example a cogged wheel, a pinion, a crown wheel, having a radius of less than 300 mm.

In a 14th aspect, according to any one of the preceding aspects, the drawing element comprises a plurality of openings, partially or totally crossing the transversal section of the drawing element.

In a 15th aspect, according to the preceding aspect, the openings are spaced from one another along the longitudinal development of the element and are shaped such as to engage protuberances borne on an external periphery of the driven organ.

In a 16th aspect, according to the preceding aspect, the drawing element comprises at least one selected from among a group comprising:
at least a chain,
at least a rack,
at least a cogged belt.

In a 17th aspect, according to any one of the preceding aspects, the movement means comprise at least a motor, at least a transmission organ connected to the motor and at least a driven organ, which is connected to the transmission organ and is active on the drawing element.

In an 18th aspect, according to the preceding aspect, the motor is configured such as to transmit a circular motion exhibiting a main rotation axis.

In a 19th aspect according to aspect 17 or 18, the transmission organ comprises at least a transmission shaft terminally connected to the driven organ and/or a predetermined number of mechanical return organs engaged between the transmission shaft and the motor.

In a 20th aspect according to the preceding aspect, the driven organ comprises at least a cogged crown wheel (either a pinion or a cogged wheel) directly connected to the drawing element, the crown wheel being configured such as to receive the motion from the motor and to transmit it to the drawing element by the engaging of the cogs of the crown wheel in the openings present in the drawing element.

In a 21st aspect according to any one of the preceding aspects from 7 to 20, the system is characterised by a counterweight coefficient, defined as a relation between the counterweighing and the net weight of the material lifted and comprised in an interval of between 0.1 and 2.0, where the counterweighing is in turn defined as the difference between the total weight of the counter-weight and the weight of the containing element.

In a 22nd aspect according to the preceding aspect the value of the counterweight coefficient of is greater than 0.4. In a 23rd aspect according to any one of the preceding aspects of the supporting structure comprises at least a guide, the guide being configured such as to slidingly receive the containing element and to guide the containing element along the operating pathway.

In a 24th aspect according to the preceding aspect, the guide comprises at least a first guide and at least a second guide, the first and second guide enabling anchoring and sliding of the containing element.

In a 25th aspect, according to any one of the preceding aspects, the system comprises at least a tilting system operating at the upper zone of the supporting structure and active on the containing element.

In a 26th aspect, according to the preceding aspect, the tilting system comprises: a first terminal portion of the first guide, arranged in a first direction, the first terminal portion being engaged to at least a first revolving element of the containing element, a second terminal portion of the second guide, arranged in a second direction that is different from the first direction, the second terminal portion being engaged with at least a second revolving element of the containing element.

In a 27th aspect, according to the preceding aspect, the second guide is inclined between 70 and 120 degrees, preferably between 80 and 95°, with respect to the first direction.

In a 28th aspect, according to any one of aspects 26 or 27, the first direction of the first terminal portion is substantially straight and the second terminal portion of the second guide is configured such as to arrange one or more of its parts in radii of curvature that are less than 1200mm.

In a 29th aspect, according to any one of the preceding aspects, the portion of the drawing element engaged with the containing element is a terminal portion of the drawing element.

In a 30th aspect, according to any one of the preceding aspects, the containing element comprises at least an inlet and at least an outlet which respectively enable entry of material internally of the containing element and expulsion of material from the containing element.

In a 31st aspect, the lifting system according to any one of the preceding aspects comprises a loading system for loading aggregate and/or cement material, comprising at least a supporting structure, at least a mixer borne by the supporting structure, the mixer comprising at least a containing body, at least a general inlet for receiving material, at least a general outlet for the unloading of material, at least a hopper underlying the mixer and exhibiting at least an inlet in fluid connection with the general outlet of the mixer, at least an outlet which enables unloading material from the hopper.

A 32nd aspect comprises a loading system for loading aggregate and/or cement material comprising at least a supporting structure, at least a mixer borne by the supporting structure, the mixer comprising at least a containing body, at least a general inlet for receiving material, at least a general outlet for unloading material, at least a hopper underlying the mixer and exhibiting at least an inlet in fluid connection with the general outlet of the mixer, at least an outlet which enables discharge of material from the hopper.

In a 33rd aspect, the lifting system described in aspects 31 or 32 comprises at least an anti-clogging device configured such as to prevent any eventual overloading and/or clogging of the hopper.

In a 34th aspect, in the lifting system of the preceding aspect, the anti-clogging device comprises: at least a shutting-off element configured such as to enable regulating the passage of material between the mixer and the hopper, at least a regulating system engaged with the shutting-off element and/or the mixer, configured such as to enable a variation of the relative position between the shutting-off element and the mixer on the basis of the detecting of at least a control parameter.

In a 35th aspect according to the preceding aspect, the shutting-off element is interposed between the general outlet of the mixer and the inlet of the hopper, enabling regulation of the area of the general outlet of the mixer.

In a 36th aspect according to the preceding aspect, the shutting-off element comprises a slidable plate and/or a closing hatch hinged to an end of the general outlet of the mixer. Alternatively the shutting-off element comprises a sliding plate and/or a closing hatch hinged to the inlet of the hopper.

In a 37th aspect according to any one of the aspects from 34 to 36, the regulating system comprises a sensor configured such as to enable detection of the control parameter.

In a 38th aspect, according to the preceding aspect, the sensor comprises at least one selected from a group comprising: at least a loading cell, which enables detecting a load proportional to the weight of the hopper, at least an overflow level sensor for the hopper, which enables a detection of the level of material internally of the hopper, and least a flow-rate sensor, which enables detection of the relative flow rate of the material in outlet from the hopper, at least a pressure sensor, which enables a detection of the pressure at a predetermined section of the hopper.

In a 39th aspect according to the preceding aspect, the sensor comprises at least a load cell.

In a 40th aspect according to the preceding aspect the sensor comprises a load cell which enables detection of a load that is proportional to the weight of the hopper.

In a 41st aspect according to the preceding aspect, the load cell is operatively interposed between a portion that is solidly constrained to the hopper and a portion that is solidly constrained to the supporting structure.

In a 42nd aspect according to the preceding aspect, the supporting structure comprises a support frame borne rigidly by the supporting structure and the load cell is engaged between a first portion of the hopper and the support frame. In a 43rd aspect, according to the preceding aspect, the hopper comprises the first portion engaged to the supporting frame by interposing the load cell and a second portion, distanced from the first portion and hinged to the support frame.

In a 44th aspect according to aspect 42 or 43, the support frame emerges horizontally projectingly from the supporting structure.

In a 45th aspect according to the preceding aspect, at least a strut is interposed between at least an upright of the supporting structure and at least a base portion of the support frame.

In a 46th aspect according to any one of aspects from 37 to 45, the regulating system comprises: a control unit connected to the sensor, an actuator organ active on the shutting-off element, the control unit being configured such as to command the actuator organ and to automatically move the shutting-off element on the basis of the intensity of the control parameter detected by the sensor.

In a 47th aspect according to the preceding aspect the control unit is configured such as to compare the intensity of the control parameter with a reference threshold and, should this intensity exceed the reference threshold, to command the actuator organ to close the general outlet of the mixer.

In a 48th aspect according to aspect 46 or 47, the control unit is configured such as to memorise a reference value of the intensity of the control parameter and to command the actuator organ with the aim of maintaining a real value of the intensity of the control parameter measured by the sensor in a predetermined environs of the reference value.

In a 49th aspect according to aspect 46 or 47 or 48, the control unit is configured such as to calculate a real flow rate of material through the outlet of the hopper and to arrest or reduce the flow of material to the hopper by action on the shutting-off element, when the overall mass in outlet from the hopper has, in a predetermined time interval, reached a corresponding value of a load to be transferred.

In a 50th aspect a mixing tower is included, for production of conglomerates, in particular cement conglomerates or asphalt conglomerates, having a lifting and unloading system comprising:
at least a supporting structure which extends along a prevalent development direction and which exhibits a base and
an upper zone,
at least a containing element for loading the material,
at least a drawing element engaged with the containing element and configured such as to move the containing element along a predetermined operating pathway extending between the base and the upper zone,
movement means associated to the supporting structure such as to impart the motion on the drawing element, enabling displacement of the container element,
at least a mixer borne by the supporting structure, the mixer comprising at least a containing body, at least a general inlet for receiving the material from the containing body when the containing body is in the upper zone above the general opening, at least a general outlet for the unloading of the material,
at least a hopper underlying the mixer and exhibiting at least an inlet in fluid connection with the general outlet of the mixer, at least an outlet which enables unloading of material from the hopper, the mixer and the hopper being arranged in such a way as to define, inferiorly of the hopper, a space to which a transport vehicle of the material exiting the hopper can accede.

In a 51st aspect, according to the preceding aspect, the tower comprises at least a shutting-off element configured such as to enable regulation of the passage of material between the mixer and the hopper, at least a sensor capable of detecting the value of at least a control parameter relating to the load present in the hopper or the flow rate of material crossing the hopper, at least a regulating system engaged with the shutting-off element and/or with the mixer, configured such as to enable a variation of the relative position between the shutting-off element and the mixer on the basis of the value detected of the control parameter.

In a 52nd aspect according to any one of aspects from 50 to 51, the supporting structure comprises a plurality of uprights, which develop from the base to the top zone, interconnected by a plurality of bars to form a reticular frame. In a 53rd aspect according to the preceding aspect, a supporting frame 218 is borne rigidly by the supporting structure and emerges horizontally projectingly from the supporting structure above the space.

In a 54th aspect according to any one of aspects from 50 to 53, the shutting-off element is interposed between the general output of the mixer and the inlet of the hopper, enabling regulation of the area of the general outlet of the mixer.

In a 55th aspect according to any one of aspects from 50 to 54, the shutting-off element comprises at least a sliding plate and/or at least a closing hatch hinged to an end of the general outlet of the mixer.

In a 56th aspect according to any one of aspects from 50 to 55, the sensor comprises at least one selected from a group comprising:
at least a load cell, which enables detection of a load proportional to the weight of the hopper,
at least an overflow level sensor, which enables detection of the level of material internal of the hopper,
at least a flow rate sensor, which enables a detection of the relative flow rate relative to the flow of material in outlet from the hopper,
at least a pressure sensor, which enables a detection of the pressure at a predetermined section of the hopper.

In a 57th aspect according to any one of aspects from 50 to 56, the sensor comprises a load cell 214 which enables detection of a load proportional to the weight of the hopper, the load cell being operatively interposed between a portion solidly constrained to the hopper and a portion solidly constrained to the supporting structure.

In a 58th aspect, according to any one of aspects from 50 to 57, the sensor comprises a load cell, which enables detection of a load proportional to the weight of the hopper, the load cell being operatively interposed between a first portion of the hopper and the support frame.

In a 59th aspect according to the preceding aspect, the hopper comprises the first portion engaged to the support frame after interposing of the load cell, and a second portion, distanced from the first portion and hinged to the support frame.

In a 60th aspect according to any one of aspects from 50 to 59, one or the support frame emerges horizontally projectingly from the supporting structure.

In a 61st aspect according to any one of aspects from 50 to 60, the supporting structure vertically emerges from the base to the upper zone.

In a 62nd aspect according to any one of aspects from 50 to 61, at least a strut, optionally two struts of which one on each flank of the tower, is interposed between at least an upright of the supporting structure and at least a base portion of the support frame.

In a 63rd aspect according to the preceding aspect, the strut engages the upright at a point located in a position that is vertically lower than the support frame and engages the support frame at a point that is horizontally distanced from the upright to an extent that is greater than or equal to an edge delimiting the outlet of the hopper.

In a 64th aspect according to any one of aspects from 51 to 63, the regulating system comprises: a control unit connected to the sensor, an actuator organ acting on the shutting-off element.

In a 65th aspect according to the preceding aspect, the control unit is configured such as to command the actuator organ and to automatically move the shutting-off organ on the basis of the intensity of the control parameter detected by the sensor.

In a 66th aspect according to the preceding aspect, the control unit is configured such as to compare the intensity of the control parameter with a reference threshold and, should the intensity exceed the reference threshold, to command the actuator organ to close the general outlet of the mixer.

In a 67th aspect according to any one of aspects from 64 to 66, the control unit is configured such as to memorise a reference value of the intensity of the control parameter and to command the actuator organ with the aim of maintaining a real value of the intensity of the control parameter measured by the sensor in a predetermined environs of the reference value.

In a 68th aspect a mixing tower is provided, for production of conglomerates, in particular cement conglomerates or asphalt conglomerates, having a material lifting and unloading system, the system comprising:
at least a supporting structure which extends along a prevalent development direction and exhibits a base and an upper zone,
at least a containing element for loading material,
at least a first and a second drawing element engaged with the containing element and configured such as to move the containing element along a predetermined operating pathway extending at least from the base to the upper zone, movement means associated to the supporting structure such as to impart motion to the drawing elements and enable displacement of the containing element along the operating pathway, the movement means and the drawing elements being configured and coupled such that during the movement of the containing element the movement means engage and release successive segments of the drawing element;
at least a mixer borne by the supporting structure, the mixer comprising at least a containing body, at least a general inlet for receiving material from the containing element when the containing element is in the upper zone, above the general opening, at least a general outlet for the unloading of material; and
at least a hopper underlying the mixer and exhibiting at least an inlet in fluid connection with the general outlet of the mixer, at least an outlet (206) which enables unloading of material from the hopper.

In a 69th aspect according to the preceding aspect, the first and the second drawing element extend on lie planes arranged on laterally opposite flanks of the supporting structure and each exhibit an elongate conformation comprising a first portion engaged with the containing element which is moved along the operating pathway such as to be arranged constantly in the space comprised between the lie planes of the first and the second drawing element, preferably in a centred position with respect to the drawing elements.

In a 70th aspect according to any one of aspects 68 and 69, the supporting structure extends along a vertical prevalent development direction and the operating pathway comprises at least a tract having a vertical development extending from the base to the upper zone.

In a 71st aspect according to any one of aspects from 68 to 70, the supporting structure comprises a plurality of uprights, which develop from the base to the top zone, interconnected by a plurality of bars to form a reticular frame having a vertical development, the uprights comprising flanged longitudinal portions joined removably such as to form a plurality of modular elements connected removably mutually superposingly to form the supporting structure, the flanged longitudinal portions of each module being connected by respective transversal bars, distinct from the bars which connect the flanged longitudinal portions of a further module.

In a 72nd aspect, according to any one of aspects from 68 to 71, the tower comprises a supporting frame constrained rigidly to the supporting structure and emerging horizontally and projectingly with respect to the supporting structure, the support frame supporting the mixer and the hopper such as to define, inferiorly of the hopper, a space which a transport vehicle exiting from the hopper can accede to.

In a 73rd aspect according to any one of aspects from 68 to 72, each drawing element defines a respective contact zone with the movement means, the contact zone of the first drawing element being arranged in a laterally opposite position and distanced with respect to the contact zone of the second drawing element.

In a 74th aspect according to the preceding aspect, each of the contact zones extends from a respective engagement point to a respective release point with the movement means and exhibits a surface area that is substantially constant during the movement of the containing element.

In a 75th aspect according to any one of aspects from 68 to 74, the first and the second drawing element each exhibit an elongate conformation comprising a second portion and either each of the second portions is engaged to a respective counterweight, or, alternatively, both the second portions engage a same common counterweight.

In a 76th aspect according to the preceding aspect, at least a first and a second of the uprights exhibit a tubular structure and house and vertically guide respectively the counterweight engaged to the first drawing element and the counterweight engaged to the second drawing element.

In a 77th aspect according to any one of aspects from 68 to 76, the successive segments define intermediate portions of each first and second drawing element comprised between the first and the second portion.

In a 78th aspect according to the preceding aspect each first and second drawing element comprises a plurality of openings, distanced from one another along the longitudinal development of the element.

In a 79th aspect according to the preceding aspect, each of the first and second drawing element comprises at least a chain, or at least a rack or at least a cogged belt.

In an 80th aspect according to any one of aspects from 68 to 79, the movement means 9 comprise: at least a motor 19, at least a transmission organ 20, connected to the motor 19 such as to transmit the motion to at least a first and a second drive organ 21, 21' connected to the transmission organ 20 and each arranged at the upper zone on a respective opposite flank of the structure 2 .

In an 81st aspect according to the preceding aspect, the first driven organ is active on the first drawing element and the second driven organ is active on the second drawing element, and wherein the motor is configured such as to transmit a circular motion to the drive organs according to the main rotation axis, optionally wherein the transmission organ comprises at least a transmission shaft terminally connected to each driven organ.

In an 82nd aspect according to aspect 80 or 81, each of the first and second driven organ comprises at least a respective cogged crown wheel, directly connected to the respective element of the first and second drawing element, each of which cogged crown wheels is configured such as to receive motion from the motor and transmit the motion to the respective of the first and second drawing organ by means of the engaging of cogs of each of the crown wheels in the openings present in the respective of the first and second drawing element.

In an 83rd aspect according to aspect 80 or 81 or 82, each of the first and second driven organ is defined by a single respective crown wheel having a diameter comprised between 150 and 600mm.

In an 84th aspect according to any one of aspects from 75 to 83, a coefficient of counterweight, defined as a ratio between counterweighing and net weight of lifted material, is comprised in a range of between 0.1 and 2.0, where the counterweighing is defined as the difference between the total weight of the counterweights 16, 16' and the total weight of the containing element 6, optionally in which the value of the coefficient of counterweighing is greater than 0.4.

In an 85th aspect according to any one of aspects from 75 to 84, the containing element comprises a loading bucket and a rocker arm rotatingly supporting the bucket and arranged on the side of the containing element facing the supporting structure.

In an 86th aspect according to the preceding aspect, the supporting structure comprises, on each flank, at least a first guide and at least a second guide, each first guide receiving at least a first and a second guide cursor borne on each flank of the rocker arm and each second guide receiving at least a third guide cursor borne on each flank by the bucket, such as to enable movement of the containing element along the predetermined operating pathway.

In an 87th aspect according to the preceding aspect the tower exhibits at least a tilting system operating at the upper zone of the supporting structure and acting on the containing element, wherein the tilting system comprises, on each flank of the supporting structure:
a first terminal portion of the first guide, arranged along a first direction or trajectory, the first terminal portion being engaged with at least the first cursor, for example comprising a revolving element,
a second terminal portion of the second guide, arranged according to a second direction or a different trajectory from the first direction or trajectory, the second terminal portion being engaged with at least the third cursor borne by the bucket, for example comprising a revolving element.

In an 88th aspect according to any one of aspects from 85 to 87, at least the hinge element is provided for rotatably engaging the bucket to the rocker arm for rotation about a horizontal tilting axis such that a rise in the rocker arm towards the upper zone causes engagement of the first cursor in the first terminal portion and the engagement of the third cursor in the second terminal portion with a consequent rotation of the loading chamber or bucket about a tilting axis.

In an 89th aspect according to the preceding aspect, between the third cursor and the horizontal tilting axis there is a distance of greater than 1000 mm, preferably greater than 1200 mm.

In a 90th aspect according to any one of aspects from 85 to 89, wherein the bucket comprises a stop cooperating with an abutment profile defined on the rocker arm for preventing a relative rotation between the bucket and the rocker arm beyond a predetermined angle.

In a 91st aspect according to any one of aspects from 87 to 90, the first direction of the first terminal portion is substantially straight, preferably vertical, and wherein the second terminal portion of the second guide is configured in an arc, with an angular span of greater than 70°.

In a 92nd aspect according to any one of aspects from 87 to 91, the first direction of the first terminal portion is substantially straight, preferably vertical, and wherein the second terminal portion of the second guide is configured as an arc having an angular span of greater than 85°.

In a 93rd aspect according to any one of aspects from 87 to 92, the second terminal portion of the second guide is configured as an arc, with a degree of curvature that is less than 1200mm, preferably less than 1000mm.

In a 94th aspect according to any one of aspects from 68 to 93, exhibiting a coefficient of dimension which is greater than 4.0, optionally greater than 5.0; the coefficient of dimension being defined as a relation between the total height of the supporting structure 2 and the prevalent dimension in plan view thereof, taken as the greater of the longitudinal measurement of the rest base 4 and the measurement of the horizontal distance between the axis of the movement means 9 and the further end of the base 4 of the supporting structure 2.

In a 95th aspect, a loading and lifting process is defined, for production of conglomerates, in particular cement or asphalt conglomerate, using a tower according to any one of preceding aspects from 50 to 94, the process comprising following steps:
positioning the containing element at the base of the tower,
loading the containing element with aggregate material originating from a loading station located in proximity of the base;
vertically lifting the containing element along the operating pathway, up to when the containing element reaches a position above the mixer,
tilting the containing element such as to tip into the mixer the aggregate material contained in the containing element; moving towards the mixer and towards the water, cement and/or asphalt material,
mixing the aggregate material with the water, the cement material and/or the asphalt material such as to form cement conglomerate and/or asphalt conglomerate,
sending the cement conglomerate and/or the asphalt conglomerate towards the hopper.

In a 96th aspect, a process for unloading and lifting is defined, for production of conglomerates, in particular cement conglomerates or asphalt conglomerates, using a tower according to any one of preceding aspects from 50 to 94, the process comprising following steps:
collecting aggregate material from a loading station located in proximity of the base and loading it internally of the containing element,
lifting the containing element along the operating pathway up to when the containing element reaches a position above the mixer,
tipping the aggregate material contained in the containing element into the mixer, for example by at least partially tilting the containing element,
moving cement material and/or asphalt material towards the mixer and tipping water in the material,
mixing the aggregate material with the water, the cement material and/or the asphalt material, in order to form cement conglomerate and/or asphalt material,
sending the cement conglomerate and/or the asphalt conglomerate towards the hopper,
detecting a value of at least a control parameter relating to the load present in the hopper or the flow rate of material crossing the hopper,
regulating the passage of material between the mixer and the hopper, changing the relative position between the shutting-off element 208 and the mixer 201 on the basis of the detected value of the control parameter.

In a 97th aspect according to the preceding aspect, a step is comprised of comparing the intensity of the control parameter with a reference threshold, and should the intensity exceed the reference threshold, of closing the general outlet of the mixer, thus preventing the passage of conglomerate to the hopper.

In a 98th aspect, a conglomerate production and loading plant is comprised, in particular of cement conglomerates and/or asphalt conglomerates, comprising:
at least a storage pit of aggregate material, such as for example sand and/or gravel,
at least a tower according to any one of aspects from 50 to 94, the base of which is arranged in the pit in such a way that at least a portion of the supporting structure is arranged and extends internally of the pit, and wherein the containing element is mobile from a start position, in which the element is located at the base and entirely housed in the pit, towards an arrival position, in which the containing element is above the mixer,
at least a conveyor housed in the pit for moving the aggregate material towards a load opening of the containing element.

### BRIEF DESCRIPTION OF THE DRAWINGS

Aspects of the invention will now be described with reference to the accompanying figures of the drawings, provided purely by way of non-limiting example, in which:

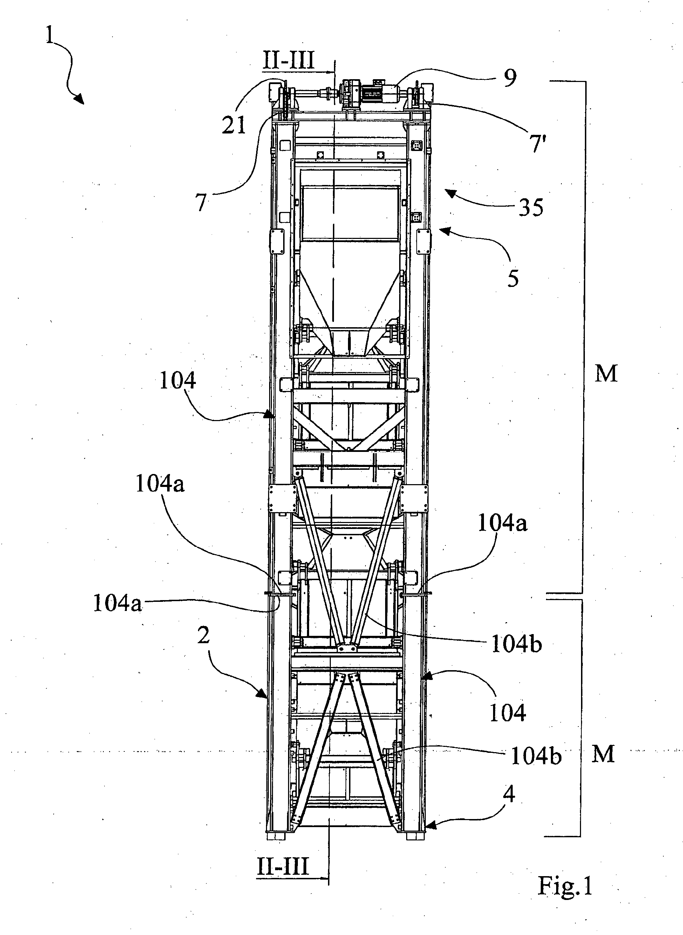

figure 1 is a front view of a mixing tower, for production of conglomerates, in particular cement conglomerates or asphalt conglomerates, according to aspects of the invention;
figure 2 is a profile view of the tower of figure 1, in which a containing element is positioned substantially at a base zone of the tower;
figure 3 is the same view as figure 2, in which the containing element has been moved from a base zone towards a zone close to the top of the tower;
figure 3b is the view of figure 2 in which the containing element has been moved to a zone where the containing element can be observed, i.e. into an unloading position towards a mixer;
figure 4, which is a plan view from above of the tower of figure 1, illustrates details relating to the movement and transmission means associated to the lifting system of the tower;
figure 5 illustrates a detail relating to the upper zone of the tower of figure 1; figure 5a is a profile view of the detail of figure 5;
figure 6a is an overall view of a first type of production and load plant of conglomerates in which one or more towers of the invention can be used;
figure 6b is an overall view illustrating a second type of production and load plant of conglomerates in which one or more towers according to the invention can be used;
figure 7 illustrates the detail A of figure 2, relating to movement means and to the drawing element;
figure 8 is a detail of figure 6 relating to a loading system according to the invention;
figure 9 is a lateral view relating to a loading element associated to the lifting system of the tower according to aspects of the invention; and
figure 10 is a plan view of the detail of figure 9.

### DETAILED DESCRIPTION

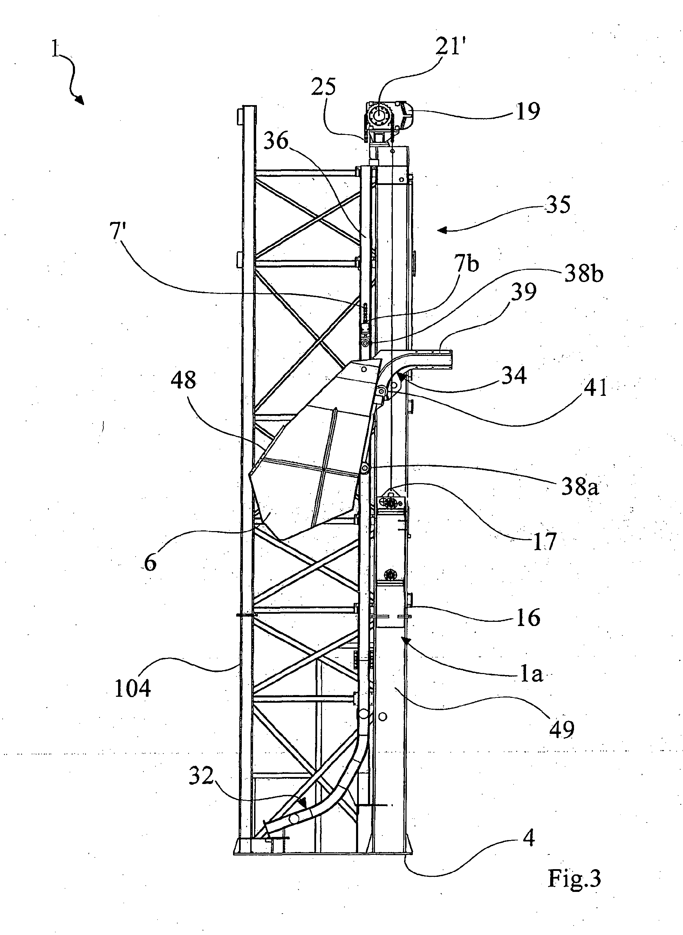

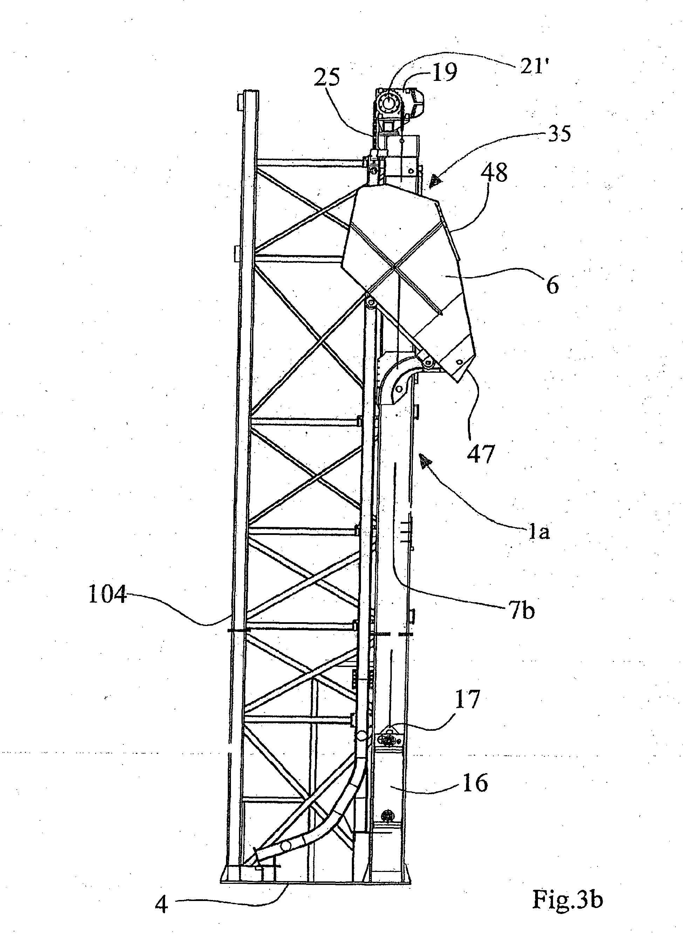

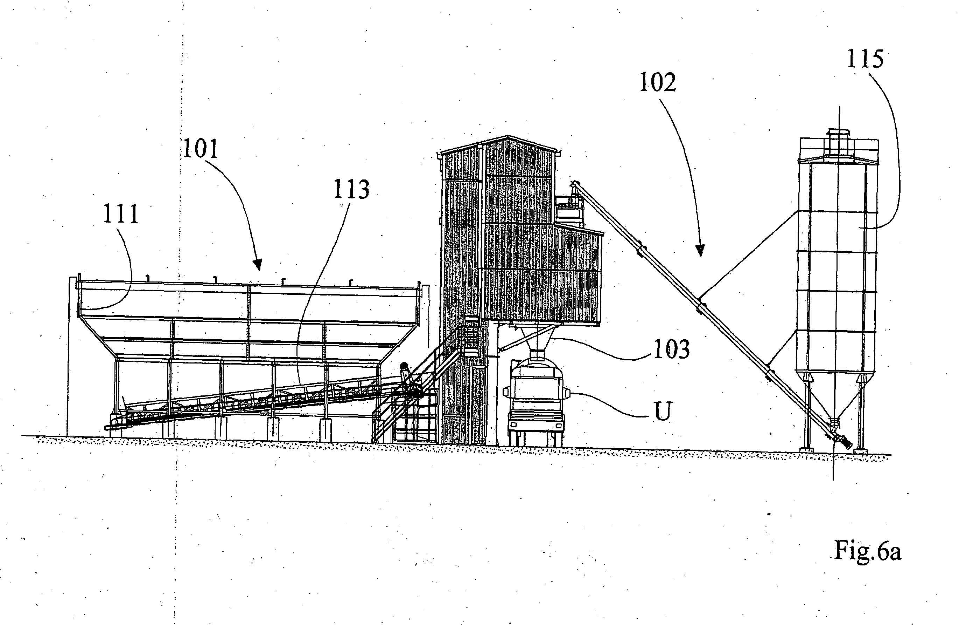

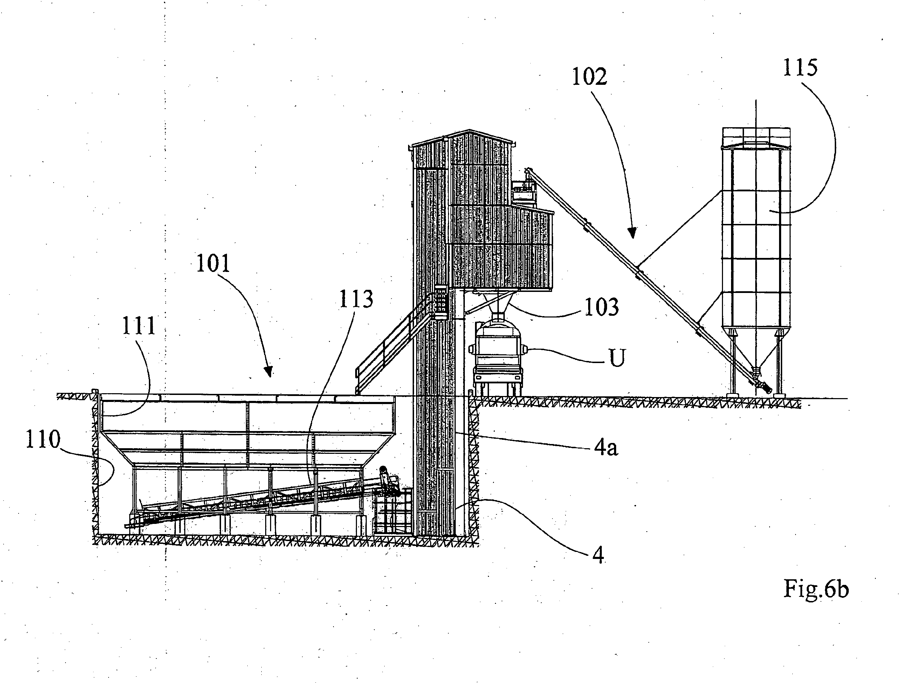

With reference to the appended figures of the drawings, 1 denotes a mixing tower for production of conglomerates, in particular asphalt or concrete conglomerates, provided with a lifting system 1a. The tower 1 can be used in preparation and loading of plants 100, for example of the type shown in figure 6a or figure 6b which schematically shows a loading system comprising, in addition to the tower 1, a storage and transport station of aggregate material 101, located at a flank of the lifting system 1, and an auxiliary lifting unit 102 located on another flank of the lifting and unloading system 1 which receives, from a silo or other container 115, conglomerates to be mixed with aggregate material and with any water and/or other additives. In the example of figure 6a, the storage station 101 includes a containing tank resting on the ground and provided with a conveyor 113 located inferiorly or laterally to the tank and which is capable of moving the aggregate material to the loading element 6 of the tower when the material is at the base 4 of the tower. In the case of figure 6b, the containing tank 111 is defined at a storage pit 112 afforded in the ground so that the upper edge of the tank is flush with the ground level and the aggregate material, such as sand and/or gravel, is housed substantially below the level of the ground. As shown in figure 6b, the tower 1 has a base 4 arranged in the pit such that at least a lower portion 4a of the supporting structure is located and extends inside the pit: in this case the containing element 6, when it reaches the base of 4 in order to receive the load of aggregate material, is completely housed in the pit. As can be seen in figure 6a and figure 6b, the lifting and unloading system 1a of the tower 1 is arranged such as to receive loads from the conveyor 113 towards the containing element 6 and move them from the bottom upwards up to a loading station (35 (figure 3), where the material in the containing element 6 is unloaded downwards, then to be conveyed towards a mixer and finally towards a hopper 103 at the head of the loading chamber of a transport unit U, for example a bucket mixer or the like.

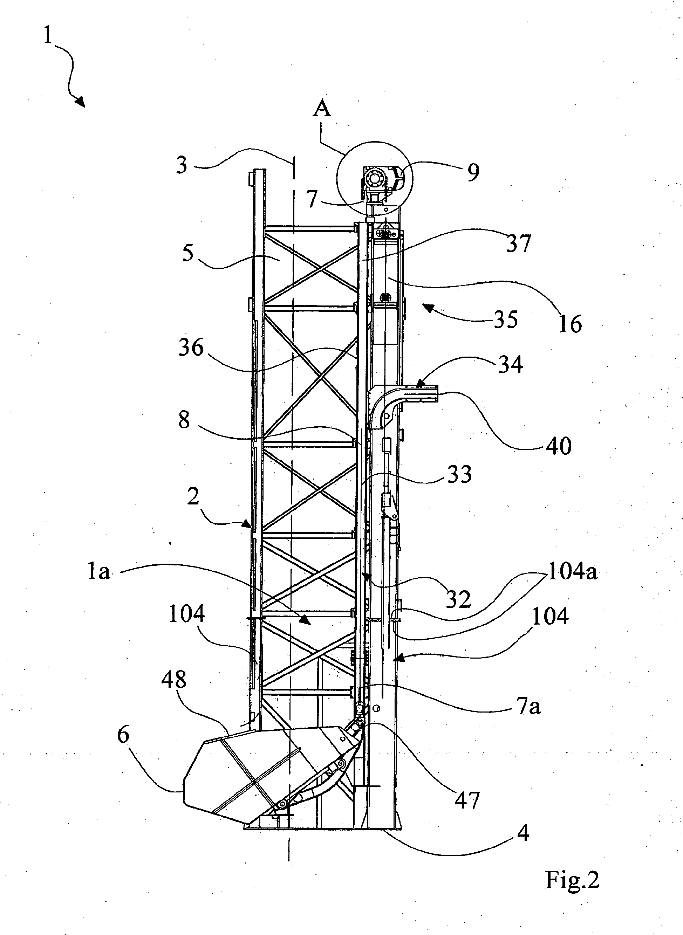

In a more detailed description of the lifting system 1a of the tower 1 and with particular reference to figures 2, 3, 3bis and 4, it should be noted that the lifting system 1 comprises a supporting structure 2, which extends along a development direction 3 (fig. 2), predominantly vertical. The supporting structure 2 exhibits a base 4 thereof in contact with the ground (in the example in figure 6b the base is actually inserted into the pit 110, as described above) and a series of uprights 104, which develop vertically extending from the base upwards up to defining an upper zone where the containing element 6 will be substantially move, as further described below. Note that the unloading station 35 is defined at the upper zone 5, which unloading station 35, depending on the shape of the loading element 6, can include a tilting station of the loading station. Obviously, if the unloading of the aggregate material contained does not require that the containing element 6 be tipped up (for example, solutions in which the containing element is provided with one or more commandable lower hatch doors) the unloading station 35 would require no tilting.

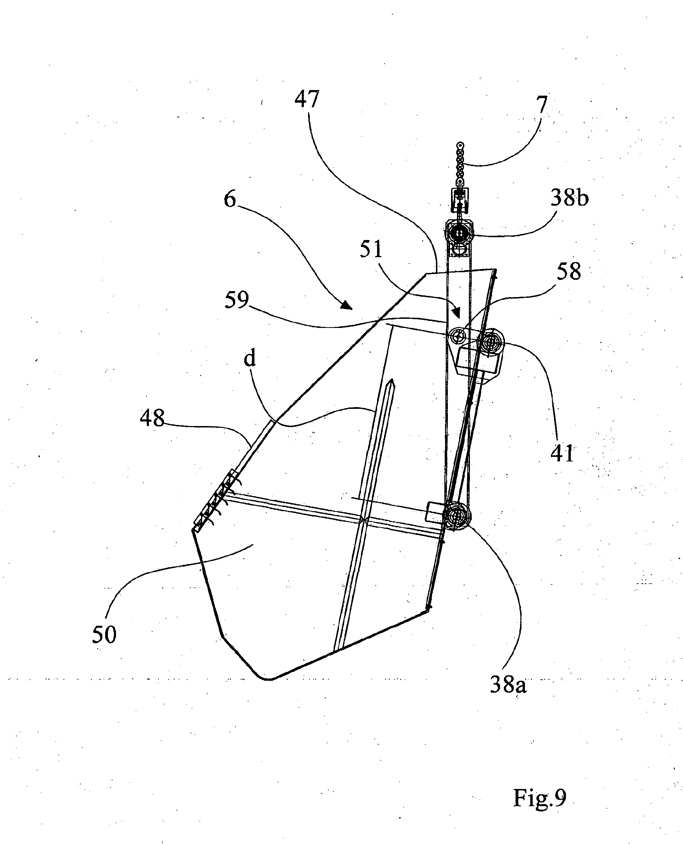

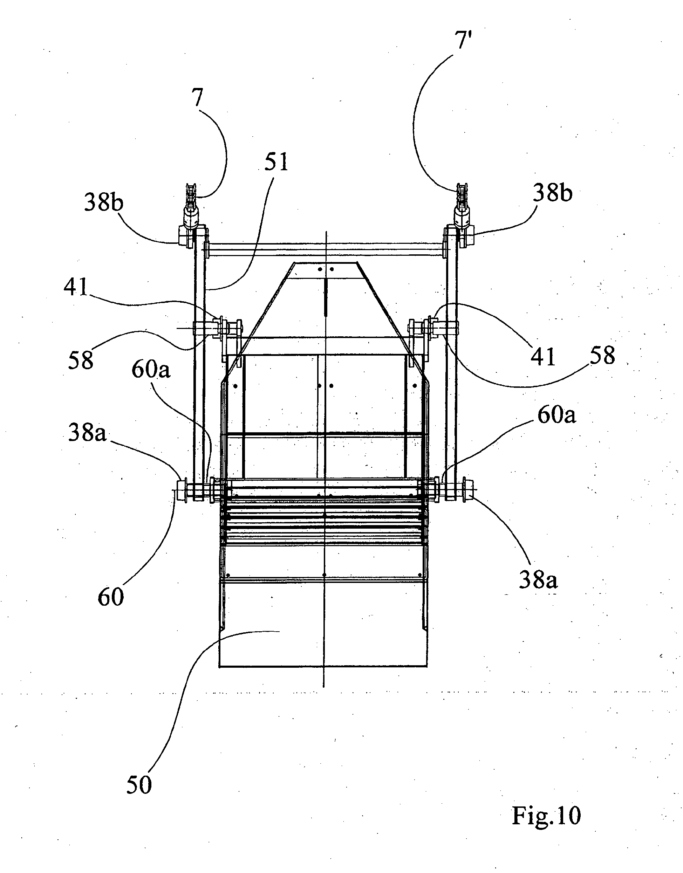

The supporting structure 2 comprises at least a guide system 32 solidly constrained to the uprights 104 and able to define a predetermined operating pathway 8 (figure 2) along which the containing element 6 is moved during ascent and descent from the base 4 up to the unloading station 35 located above the mixer and the hopper. The supporting structure 2 illustrated in the figures of the drawings in fact comprises two guide systems 32, one on each side of the lifting system 1, in order to enable a balanced handling and stable guiding of the containing element 6. In more detail (and describing only the guide system present on one side as the one on the other side is absolutely identical) each guide system 32 located on each side of the lifting system 1 comprises at least a first guide 33 and at least a second guide 34. The first guide 33 is destined to receive a first cursor and a second cursor 38a and 38b in sliding engagement (fig. 3, fig. 9 and fig. 10), for example comprising one or more skates or one or more rolling elements, constrained to the containing element 6. In turn, the second guide 34 is destined to engagingly receive at least a third cursor 41 (fig. 3, fig. 9 and fig. 10), for example, comprising one or more skates or one or more rolling elements, also constrained to the containing element 6 in a distanced position with respect to the position of the first cursor 38. In the example illustrated in figures 9 and 10, the containing element 6 comprises a load bucket 50 and a rocker arm 51 supporting the bucket and arranged on the side of the containing element facing the supporting structure 2. The first and second guide cursors 38a, 38b are borne on each side of the rocker arm 51, while the third guide cursor 41 is borne on each side of the bucket 50. As can be seen from figures 3 and 3b, the first and second cursor constantly engage the first guide 33, which in this case is perfectly upright in a prevalent tract, thus obliging the rocker arm and the bucket to move up and down vertically. The third cursor 41, which is borne by the bucket, engages the second guide only at a certain point in the rising motion (figure 3) causing, thanks to the rotating engagement between the bucket and the rocker arm and the profile of the second guide, a tilting of the bucket (figure3). In particular, the tilting system operating at the upper zone 35 comprises, on each flank of the supporting structure, a first terminal portion 36 of the first guide 33, arranged in a first direction or trajectory 37 and suitable for receiving the first and the second cursor 38a, 38b, and a second terminal portion 39 of the second guide 34, arranged in a second direction or trajectory 40 that is different from the first direction or trajectory 37; the second terminal portion 39 is suitable for receiving the third cursor borne by the bucket 50. Since the bucket is rotatably constrained to the rocker arm 51, which for example exhibits a forked conformation, by at least a hinging 60a defining a horizontal tilting axis 60, the tilting is done as follows: a rise of the rocker arm 51 towards the upper zone causes the engagement of at least the first cursor 38a in the first terminal portion and the engagement of the third cursor 41 in the second terminal portion with a consequent rotation of the loading chamber or bucket 50 about the tilting axis 60. A distance d is defined between the horizontal tilting axis 60 and the third cursor, shown in figure 9, that is greater than 1000 mm, preferably greater than 1200 mm. In addition, the bucket 50 can include an abutment 58 cooperating with a abutment profile 59 defined on the rocker arm 51 such as to prevent relative rotation between a bucket and the rocker arm over a predetermined angle: in practice, the profile 51 can be brought back from the bar and be substantially straight and transversal - for example, perpendicular - to the unloading opening 47 of the bucket 50. The abutment 58 is arranged on a side of the profile facing towards the second guide 34 such that the bucket can following the tilting imposed by the guide 34 when the third cursor engages the guide 34, while a rotation of the bucket in the opposite direction is prevented (the ant-clockwise direction in the figures) during the rising of the bucket from the base 4 towards the upper zone 5. Alternatively to what is described, the profile can be borne by the bucket and the abutment can be borne by the rocker arm, in any case obtaining a like effect to what has been described.

In the illustrated examples the first guide 33 exhibits a first terminal portion 36 extending according to a first direction 37 (fig. 2), for example vertical, while the second guide 34 exhibits a second terminal portion 39 which extends in a second direction or trajectory 40 (figure 2) different from the first direction 37: in particular the second terminal portion 39 defines an arched tract in a distancing direction with respect to the first terminal portion 36 such that when the containing element 6 nears the upper zone 5 the first and the second guide 33, 34 are able to move the cursors 38a, 38b, 41 engaged therein in different trajectories, such as to cause an angular rotation of the containing element 6 together with the raising thereof in proximity of the upper zone 5, as described above. In the illustrated examples, the first development direction 37 of the first terminal portion 36 is straight and vertical, while the second terminal portion 39 of the second guide 34 is configured as an arc, with an angular width that is greater than 70°, preferably greater than 85°, and with a radius of less than 1200mm, preferably less than 1000mm.

As seen in figure 3 and figure 3bis, the angular movement of the containing element is such as to move an unloading opening 47 (figure 2) of the containing element 6 from a condition in which the unloading opening 47 faces upwards (figure 3) to a condition in which the opening 47 faces downwards (figure 3bis) and can unload the material downwards, for example into the hopper 103 previously described or in a further component for processing or storing. Note that the containing element 6 further comprises a loading opening 48 (figure 2) which in the initial position where the containing element is at the base of the supporting structure 2 (figure 2) is orientated horizontally, while in the final position after tilting (figure 3b) it is oriented inclined close to the vertical.

Alternatively, to what has been described the tower can be without the tilting system 35 when a loading element 6 is used that has an openable lower hatch: in this case only the first guide will be present such as to move the element 6 to above the mixer where the opening of the hatch will cause the descent of the aggregate material from the element 6 to the mixer.

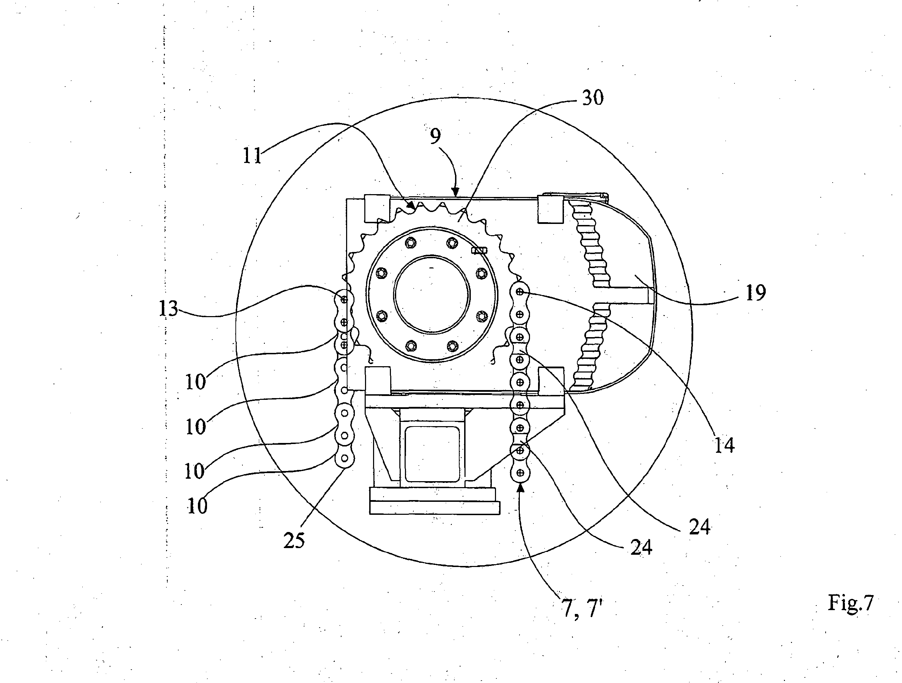

The supporting structure 2 also engages an elongate drawing element 7. The drawing element 7 is also engaged to the body of the containing element 6 and is configured such as to move the containing element 6 along the operating pathway 8 defined by the above-described guides. In practice, the drawing element 7 comprises an elongate body arranged in proximity of the above-described guides and exhibiting a plurality of openings 24 (see the detail of figure 7) along the longitudinal development thereof. The openings 24 are mutually spaced and are designed to engagingly receive the movement means 9 which are also associated to the supporting structure 2. Note also, as already described with reference to the guides, that the lifting system 1 can comprise a respective drawing element 7, 7' for each flank of the supporting structure 2. In this case, the first and second drawing element 7, 7' extend on lie planes arranged on laterally opposite flanks of the supporting structure 2 and each exhibit an elongate conformation comprising a first portion 7a engaged to the containing element 6 which is moved along the operating pathway in such a way as to be constantly arranged in the space comprised between the lie planes of the first and the second drawing element, preferably in a centered position with respect thereto, such as to symmetrically draw the load in a balanced way. From the design point of view each drawing element 7, 7' can comprise a chain 25, in which case the openings 24 are defined by substantially through holes present between a link and a following link of the chain 25. Alternatively each drawing element 7, 7' can comprise a rack: In this case the openings 24 are defined by the successive cavities present between a cog and a next cog of the rack.

As shown in figures 2 and 3, where each drawing element 7, 7' includes a chain 25 for each flank of the supporting structure 2, the drawing element is arranged in a substantially vertical development, parallel to the uprights of the supporting structure 2.

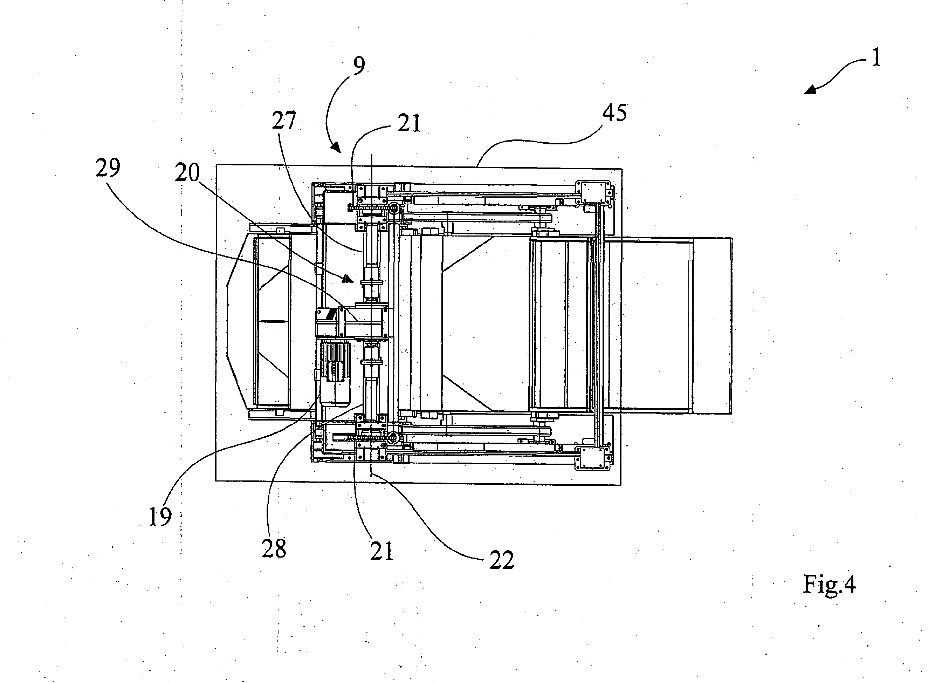

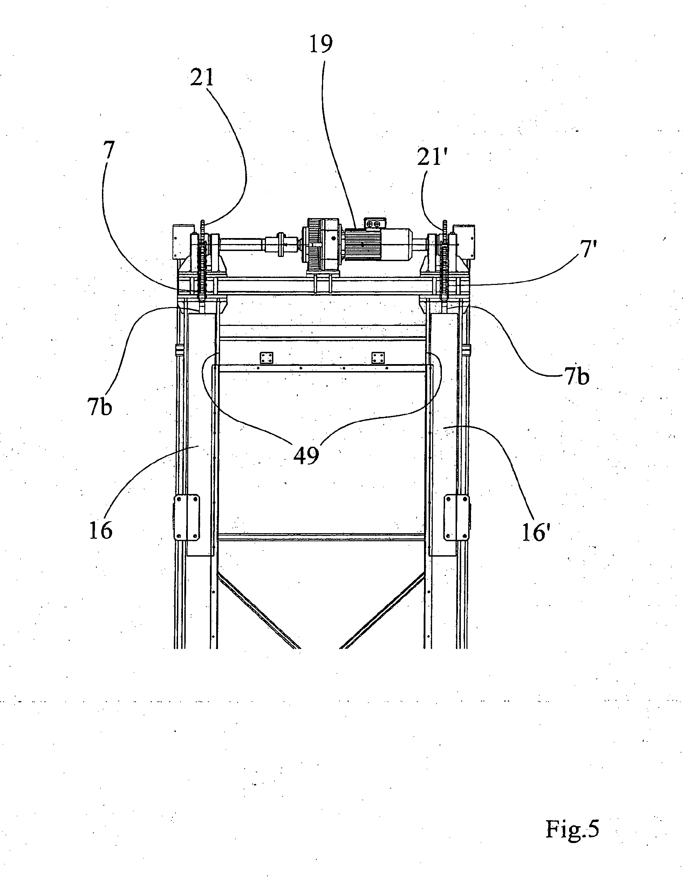

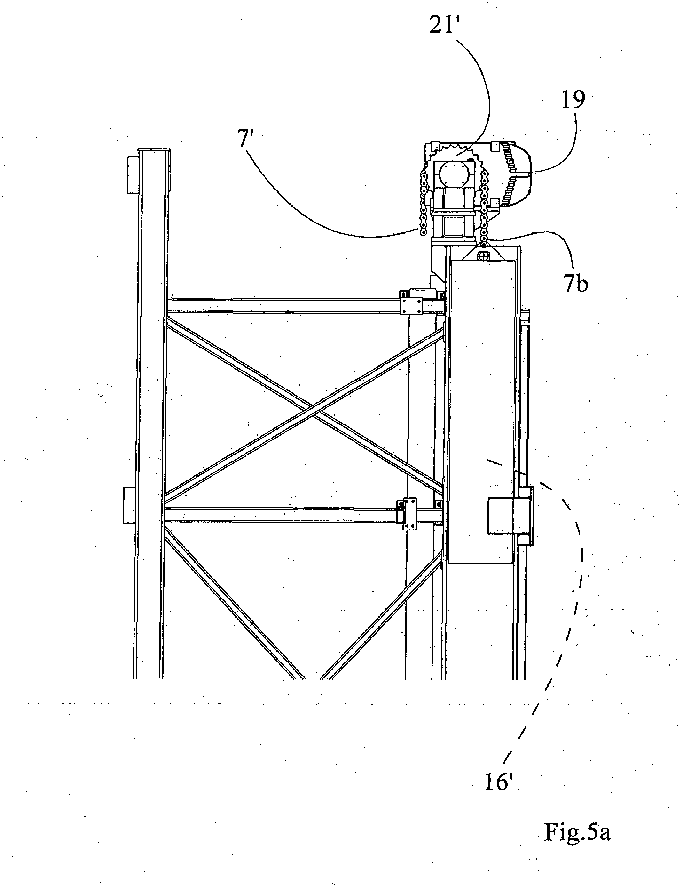

With the aim of activating the drawing elements 7, 7', movement means 9 are provided, acting on at least a portion of the drawing elements 7, 7'. The movement means 9 causes displacement of the drawing elements 7 and 7' which thus, being engaged to the containing element 6, involve the movement of the containing element 6 along the trajectory or operating pathway 8 define by the guides 33, 34 described above. In particular, the movement means 9 comprising at least a motor 19 borne by the supporting structure 2 and at least a transmission organ 20 connected to the motor 19 and able to receive therefrom the motion for transferring it to a driven organ 21, 21' which is in turn able to engage a portion of the drawing element 7. In the illustrated example, as can be seen in figure 4 and figure 5, a motor 19 is provided, located centrally, which transfers the motion to a transmission organ 20 comprising a reducer 29 and a first and a second shaft 27, 28 each of which exhibits a respective terminal portion connected to the gear reducer and a respective terminal portion where a respective driven organ 21, 21' is keyed, acting engagingly on the chain 25 or other drawing element 7, 7'. In this way, the motor 19 move the shafts in a circular motion about a main rotating axis 22 such as to set the driven organs 21, 21' in rotation and therefore the chains 7, 7' operating on each flank of the supporting structure 2. The movement means 9 and the drawing elements 7, 7', thanks to the special configuration and coupling thereof, enable the means 9 to engage and release, during the movement of the containing element 6, progressively successive segments 10 (figure 7) of each of the drawing elements 7 and 7'. In other words, each driven organ 21, 21' is active on successive segments 10 of the respective drawing element 7, 7', engaging and releasing the openings 24 present on the drawing element 7, 7' itself. In further detail, each drawing element 7, 7' defines a contact zone 11 with the respective driven organ 21, 21'. The contact zone 11 exhibits a substantially constant area during the movement of the containing element 6: in practice, the area of the contact surface between the driven organ 21, 21' and the portion involved by the contact on the respective drawing element 7, 7' is constant in such a way as to enable a uniform and reliable transfer of the drive power. Further, contact zone further exhibits also a certain longitudinal development such as to advantageously distribute the power on the various cogs of the driven organ 21, 21' (figures 4 and 5). The contact zone 11 stretches, instant by instant, from an engagement point 13 (figure 7) to a release point 14 between the driven organ 21, 21' of the movement means 9 and the drawing element 7, 7'. In the illustrated embodiment, where a single cogged crown wheel is used for each drawing element, the angular extension of the contact zone along the surface of the driven organ is comprised between 90° and 200°, optionally between 140° and 200° and the diameter of the crown wheel 30 is comprised between 150 and 600 mm. In a case in which the drawing element 7, 7' is, as in the illustrated examples, a chain 25, each driven organ 21, 21' comprises at least a cogged crown wheel 30 (figure 7) acting directly on the segments 10 of the respective drawing organ 7, 7'. As already briefly mentioned, the crown wheel 30 receives drive from the motor 19 and continuously transmits it to the drawing element 7, 7' by engaging the cogs of the crown wheel 30 in the openings 24 present in the drawing element 7, 7', i.e. in the openings 24 defined by the various links of the chain 25. Note that the driven element 21 can also comprise organs of a slightly different nature. For example, should it be desired, as the drawing organ 7, 7', to use a cogged belt or a specially-shaped rack, the driven organ 21, 21' could be realized in the form of a pinion or a further rotating element provided with an appropriate cogging destined to engage with the openings 24 present on the drawing element 7, 7'.

In accordance with another aspect the system 1 includes a counterweight 16 (figs. 3, 5 and 5a) engaged with a second portion 17 of drawing element 7. In the example of the appended drawings, where there are two drawing elements 7, 7', the first and second drive elements 7, 7' each exhibits a second portion 7b engaged with a respective counterweight 16, 16'; alternately both second portions 7b of the two drawing elements 7 7' can engage a single common counterweight. In any case, the contact area 11, 11' of each first and second drawing element 7, 7' is developed in a stretch of the respective drive element 7, 7' that is intermediate between said first portion 7a engaged to the element 6 and the second portion 7b engaged to the respective counterweight or the only common counterweight. As seen in figures 3, 5 and 5a, each counterweight 16, 16' is housed for sliding motion in a relative guide 49 arranged in a prevalent development direction that is substantially vertical and flanked to the guides 32 mentioned herein above in the present description. In a further feature, each guide 49 can be defined internally of one of the uprights 104 of the supporting structure 2. Each counterweight 16, 16' engages the second portion 7b of the respective drawing element 7, 7', which is thus inserted for a tract thereof in the guides of the counterweight, as can be observed in figure 2 and in figure 3. Each counterweight 16, 16' cooperates in lifting the containing load 6 because the counterweight is operating on a portion of the drawing element 7, 7' opposite the first engaging portion 7a (fig. 2) with the containing element 6 with respect to the point where the movement means 9 act; as already mentioned, the contact zone 1 between the drawing element 7, 7' and the driven organ 21, 21' develops in an intermediate tract between the first portion 7a of the drawing element 7, 7' and which engages with the containing element, and the second portion 7b of the drawing element 7, 7', which engages to the counterweight 16, 16'. Figures 2 and 3 illustrate a configuration in which the second portion 7b of the drawing element 7, 7' engaged to the respective counterweight 16, 16' is a terminal portion of the drawing element. It is however possible to have alternative solutions in which the drawing element 7, 7' extends beyond the counterweight 16, 16'. It is also possible to include use of a plurality of counterweights specially guided and engaged at successive portions of the drawing element 7, 7'.

In a further alternative, the motor organ 19 might not be arranged at the top of the supporting structure 2. It is in fact possible to have a motor 19 placed at the base 4 and connected with the driven organ 21, 21' via a transmission system comprising one or more transmission elements or mechanical organs such as cogged wheels, pulleys, belts or more besides which enable transfer of motion generated by the motor 19 to the driven organ 21, 21' located at the upper zone 5.

In a further aspect, the lifting and unloading system 1, thanks to the particular verticality of the guides 33, 34 and the compactness of the movement means 9, exhibits a size coefficient of greater than 4.0, for example greater than 5.0. The size coefficient is defined as the ratio between the total height of the single supporting structure 2 and the larger plan dimension: the latter is taken as the larger of the longitudinal measurement of the rest base 4 and the measurement of the horizontal distance between the axis 22 of the movement means 9 and the furthest end of the rest base 4.

It is also specified that the lifting system also has a coefficient of counterweight, defined as the ratio between the counterweighing and the net weight of the lifted material in the range of from 0.1 to 2.0; the counterweight is understood as the difference between the total weight of the counterweight 16 and the weight of the containing element 6.

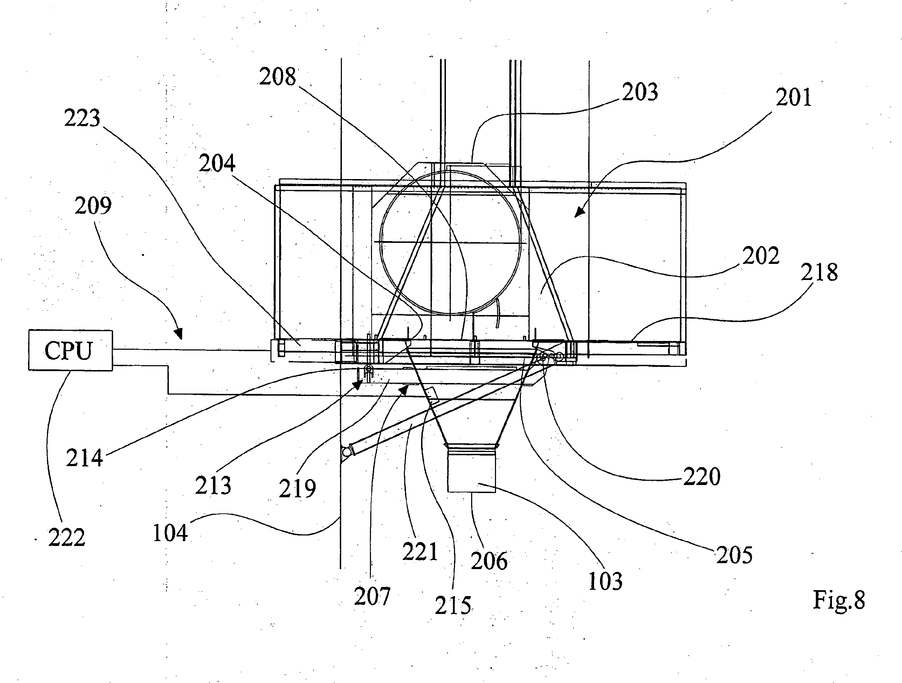

Returning to the description of the tower 1, note that it is equipped with a mixing and loading system 200 (figures 6a and 6b) which includes at least one mixer 201 (figs. 6a, 6b and 8) borne by said supporting structure; the mixer 201 includes a containing body 202 having a general inlet 203 for receiving material, and a general outlet 204 for the discharge of material into the hopper below 103, which has a respective entry 205 in fluid connection with the general outlet 204, and at least an outlet 206 for the discharge of material, for instace into the loading compartment of the mixer bucket. The loading system 200 includes at least an anti-clogging device 207 configured such as to prevent a possible overload and/or clogging of the hopper 103. In more detail, the anti-clogging system 207 includes a shutting-off element 208 configured such as to allow closing of the passage of material between the mixing hopper 201 and a regulating system 209 engaged with the shutting-off element 208 and/or with the mixer 201 and acting on the shutting-off element in such a way as to enable a variation in the relative position between the shutting-off element 208 and the mixer 201 on the basis of detecting at least a control parameter by a sensor, as will be more fully described in the following. The shutting-off element 208 is interposed between the general outlet 204 of the mixer 201 and the inlet 205 of the hopper 103, enabling regulation of the area of passage of material from the general outlet 204 of the mixer 201 towards the hopper. From a constructional point of view the shutting-off element 208 comprises a sliding plate or a closing hatch hinged to an end of the general outlet 204 of the mixer 201. A plurality of rotating hatches can be used, or several sliding plates or combinations of these solutions. According to the individual cases, the regulating system moves oscillatingly or translatingly with respect to the plate or the hatch.

In more detail, the adjustment system 209 includes a sensor 213 configured to enable detection of the control parameter and transmit it to the control unit; the sensor 213 includes a load cell 214, which allows detection of a control parameter and is constituted by a load proportional to the weight of the hopper 103. Note that alternatively or in combination with the load cell 214, the sensor may also include at least an overflow level sensor 215, which enables detection of a control parameter relative to the level of material in the hopper, and/or at least a flow sensor, which allows detection of a control parameter corresponding to the flow of material out of the hopper 103, and/or at least a pressure sensor, which enables detection of a control parameter corresponding to the pressure at a predetermined section of the hopper.

In a case where the sensor comprises a load cell 214 for detecting a load proportional to the weight of the hopper 103, the load cell 214 is operatively interposed between a portion solidly constrained to the hopper 103 and a portion solidly constrained to the supporting structure 2. In practice, the supporting structure 2 comprises a support frame 218 rigidly borne by the supporting structure 2 and emerging horizontally projectingly from the supporting structure 2. The support frame supports the mixer and the hopper such as to define, inferiorly of the hopper, a compartment where it can access a transport vehicle U material exiting from the hopper.

For example, a strut 221 or other support system is interposed between at least an upright 104 of the supporting structure 2 and at least a base portion of the support frame 218 in order to adequately support at least part of the loads bearing on the support frame 218. According to one aspect, the strut 221 can engage the upright at a point located in a vertically lower position with respect to the support frame 218 and can engage the support frame at a point that is horizontally distanced from the upright to an extent that is greater than or equal to the vertical halfway line of the hopper: in the illustrated example the strut engages the support frame 218 at a zone which is distant from the upright by more than or equal to the maximum distance of an edge delimiting the outlet 206 of the hopper 103.

The load cell 214 is engaged between a first portion 219 of the hopper 103 and the support frame 218. More specifically, the hopper 103 includes a first portion 219, which is engaged to the support frame 218 after interposition of the load cell 214, and a second portion 220, spaced from the first portion 219 and hinged to the support frame 218. Finally, the adjustment system 209 includes a control unit 222, for example constituted by one or more programmable CPUs and/or one or more analog control units. The control unit is connected to the sensor 213 such as to receive a signal from the sensor 213 relating to the control parameter. The adjustment system 209 also includes an actuator organ 223 acting on the shutting-off element 208 such as to adjust, on command of the control unit, the position of the shutting-off element 208 with respect to the general outlet opening from the mixer. The control unit 222 is in turn configured such as to control the actuator organ 223 and to automatically move the shutting-off element 208 based on the intensity of the control parameter detected by the sensor 213. For example, the control unit 222 is configured such as to compare the intensity of the control parameter with a threshold reference, and if this intensity exceeds the threshold reference, to operate the actuator body 223 to close the general outlet 204 of the mixer 201. In the event that the sensor is a load cell, the control unit compares the load detected by the load cell with a reference load and commands the partial or total outlet of the mixer if the value detected by the load cell exceeds a threshold reference considered indicative of a possible clogged condition. Independently of the type of sensor used, at least one threshold value is previously stored in a memory associated with the control unit, or the control unit is configured such as to require an operator to enter the value of that threshold.

The control unit 222 can also be configured so as to store a reference value of the intensity of the control parameter and to command the actuator body 223 to maintain a real value of the control parameter intensity measured by said sensor 213 in a predetermined range around the target of that reference value. If the sensor is a load cell, the control unit can be controlled to maintain the detection of the load cell constant or within a predetermined range of variability such as to ensure that moment by moment there is substantially the same amount of cement conglomerate. Further, the control unit 222 can be configured such as to calculate a real range of material through the exit 206 of the hopper 103 and stop the flow of material to the hopper 103 through the action on the shutting-off element 208, when the total mass exiting from the hopper 103 has, in a fixed time interval, reached a corresponding load value to be transferred. For example, the control unit can be configured to maintain the level of material in the hopper substantially constant and then, as it already knows the real outlet section of the hopper and the cement conglomerate used, to calculate the real extent of the outgoing flow instant by instant from the hopper, automatically blocking the material in the hopper once a total load value transferred to the mixer bucket has been reached.

As regards the structural profile, the supporting structure 2 of the tower 1 comprises a plurality of uprights 104, which develop from the base to the top zone, interconnected by a plurality of bars 104a to form a reticular framework having a vertical development; the uprights comprise flanged longitudinal portions 104b removable jointed such as to form a plurality of modular elements M connected removably in a relation of mutual superposing to form the supporting structure: the flanged longitudinal portions of each module are connected by respective transversal bars that are different from those which connect to flanged longitudinal portions of a further module. Note that also the guide systems 32 are modular and exhibit consecutive flanged portions removable engaged to one another. Each module M comprises, for each flank of the tower, one of the portions forming the guide system 32.

Lastly, a further aspect relates to a process for production of conglomerates, in particular cement conglomerates or asphalt conglomerates, that uses a tower as described herein above. The process comprises steps of:
collecting aggregate material from a loading station located in proximity of the base 4 and loading the aggregate material into the containing element 6; for example the loading station can comprise a conveyor 113 which moves the aggregate material in the containing element 6;
lifting the containing element 6 along the operating pathway 8 up to when the containing element reaches a position above the mixer 201;
transferring into the mixer 201 aggregate material contained in the containing element for example by at least partly tilting the containing element or opening a lower hatch in the containing element 6;
moving water, cement and/or asphalt material towards the mixer 201 and tipping it into the mixer 201;
mixing the aggregate material with water, the cement material and/or the asphalt material, such as to form cement conglomerate and/or asphalt conglomerate;
sending the cement conglomerate and/or the asphalt conglomerate towards the hopper 103;
loading the transport unit U.

During these steps, the process can also comprise detecting the value of at least a control parameter relating to the load present in the hopper 103 or relating to the flow rate of material crossing the hopper 103, and regulating the passage of material between the mixer 201 and the hopper 103, varying the relating position between the shutting-off element 208 and the mixer 201 on the basis of the detected value of the control parameter.

The step of comparing can comprise comparing the intensity of the control parameter with a reference threshold, and should the said intensity exceed the threshold reference, can include closing the general outlet of the mixer, thus preventing passage of the conglomerate to the hopper.

The dimensions of the free passage section of the general outlet can be continuously adjusted such as to maintain the flow rate of the conglomerate exiting the hopper in the environs of a desired flow rate value which optimizes times and prevents risks of clogging or problems connected to uncontrolled outflow of the material.

## Claims

1. A mixing tower for production of conglomerates, in particular cement conglomerates or asphalt conglomerates, comprising:
a lifting and unloading system (1), comprising:
at least a supporting structure (2) which extends along a vertical prevalent development direction (3) and which exhibits a base (4) and an upper zone (5), the supporting structure (2) exhibits a series of uprights which develop vertically extending from the base (4) upwards up to defining the upper zone (5),
at least a containing element (6), movable on the upper zone, for loading the material,
at least a first and a second drawing element (7, 7') engaged with the containing element (6) and configured such as to move the containing element (6) along a predetermined operating pathway (8) extending between at least the base (4) and the upper zone (5), wherein the operating pathway (8) comprises at least a tract having a vertical development extending from the base (4) to the upper zone (5), and wherein the first and the second drawing element (7, 7') each exhibit an elongate conformation comprising a second portion (7b) and
either each of the second portions is engaged to a respective counterweight, or, alternatively,
both the second portions engage a same common counterweight, and wherein at least a first and a second of the uprights exhibit a tubular structure and house and vertically guide respectively the counterweight (16) engaged to the first drawing element (7) and the counterweight (16') engaged to the second drawing element (7');
movement means (9) associated to the supporting structure (2) such as to impart the motion on the drawing elements (7, 7'), enabling displacement of the containing element (6) along the operating pathway (8), said movement means (9) and said drawing elements (7, 7') being configured and coupled in such a way that during movement of the containing element (6) said movement means (9) engage and release successive segments (10) of the drawing element (7, 7');
at least a mixer (201) borne by the supporting structure (2), the mixer (201) comprising at least a containing body (202), at least a general inlet (203) for receiving the material from the containing body (6) when the containing body (6) is in the upper zone above the general opening, at least a general outlet (204) for the unloading of the material; and
at least a hopper (103) underlying the mixer (201) and exhibiting at least an inlet (205) in fluid connection with the general outlet (204) of the mixer (201), at least an outlet (206) which enables unloading of material from the hopper (103).

2. The mixing tower of claim 1, wherein the first and the second drawing element (7, 7') extend on lie planes arranged on laterally opposite flanks of the supporting structure and each exhibit an elongate conformation comprising a first portion (7a) engaged with the containing element (6) which is moved along the operating pathway such as to be arranged constantly in the space comprised between the lie planes of the first and the second drawing element, preferably in a centred position with respect to the drawing elements (7, 7').

3. The mixing tower of claim 1 or 2 , wherein the supporting structure (2) comprises a plurality of uprights (104), which develop from the base to the upper zone, interconnected by a plurality of bars to form a reticular frame having a vertical development, the uprights comprising flanged longitudinal portions joined removably such as to form a plurality of modular elements connected removably mutually superposingly to form the supporting structure, the flanged longitudinal portions of each module being connected by respective transversal bars, distinct from the bars which connect the flanged longitudinal portions of a further module.

4. The mixing tower of any one of the preceding claims, comprising a supporting frame (218) constrained rigidly to the supporting structure (2) and emerging horizontally and projectingly with respect to the supporting structure (2), the support frame supporting the mixer and the hopper such as to define, inferiorly of the hopper, a space which a transport vehicle exiting from the hopper can accede to.

5. The mixing tower of any one of the preceding claims, wherein each drawing element (7, 7') defines a respective contact zone (11, 11') with the movement means (9), the contact zone (11) of the first drawing element being arranged in a laterally opposite position and distanced with respect to the contact zone (11') of the second drawing element, and wherein each of the contact zones (11,11') extends from a respective engagement point (13) to a respective release point (14) with the movement means (9) and exhibits a surface area that is substantially constant during the movement of the containing element (6).

6. The mixing tower of any one of the preceding claims, wherein
said contact zone (11, 11') of each first and second drawing element (7, 7') develops over a tract of the respective drawing element (7, 7') which is intermediate between the first and the second portion (7a, 7b).

7. The mixing tower of any one of the preceding claims, wherein the successive segments (10) define intermediate portions of each first and second drawing element (7, 7') comprised between the first and the second portion (7a, 7b), and wherein each first and second drawing element comprises a plurality of openings (24), distanced from one another along the longitudinal development of the element, and optionally wherein said each of the first and second drawing element (7, 7') comprises one from a group comprising:
at least a chain (25, 25'),
at least a rack
at least a cogged belt.

8. The mixing tower of any one of the preceding claims, wherein the movement means (9) comprise:
at least a motor (19),
at least a transmission organ (20), connected to the motor (19) such as to transmit the motion to at least a first and a second driven organ (21, 21') connected to the transmission organ (20) and each arranged at the upper zone on a respective opposite flank of the structure (2), the first driven organ being active on the first drawing element (7) and the second driven organ being active on the second drawing element (7'), and wherein the motor (19) is configured such as to transmit a circular motion to the driven organs according to the main rotation axis (22), optionally wherein the transmission organ (20) comprises at least a transmission shaft (27, 28) terminally connected to each driven organ (21, 21').

9. The mixing tower of the preceding claim, wherein each of the first and second driven organ (21, 21') comprises at least a respective cogged crown wheel (30), preferably wherein each of the first and second driven organ (21, 21') is defined by a single respective cogged wheel (30) having a diameter comprised between 150 and 600 mm, directly connected to the respective element of the first and second drawing element (7, 7'), each of which cogged crown wheels (30) being configured such as to receive motion from the motor (19) and transmit the motion to the respective of the first and second drawing element (7, 7') by means of the engaging of cogs of each of the crown wheels (30) in the openings present in the respective of the first and second drawing element (7, 7').

10. The mixing tower of any one of the preceding claims from 6 to 10, wherein a coefficient of counterweight, defined as a ratio between counterweighing and net weight of lifted material, is comprised in a range of between 0.1 and 2.0, where the counterweighing is defined as the difference between the total weight of the counterweights (16, 16') and the total weight of the containing element (6), optionally in which the value of the coefficient of counterweighing is greater than 0.4.

11. The mixing tower of any one of the preceding claims, wherein the containing element (6) comprises a loading bucket (50) and a rocker arm (51) supporting the bucket and arranged on the side of the containing element facing the supporting structure (2), the supporting structure comprising, on each flank, at least a first guide (33) and at least a second guide (34), each first guide receiving at least a first and a second guide cursor (38a, 38b) borne on each flank of the rocker arm (51) and each second guide (34) receiving at least a third guide cursor borne on each flank by the bucket (50), such as to enable movement of the containing element (6) along the predetermined operating pathway (8).

12. The mixing tower of any one of the preceding claims, comprising at least a tilting system (35) operating at the upper zone (5) of the supporting structure (2) and acting on the containing element (6), wherein the tilting system (35) comprises, on each flank of the supporting structure:
a first terminal portion (36) of the first guide (33), arranged along a first direction or trajectory (37), the first terminal portion (36) being engaged with at least the first cursor (38), for example comprising a revolving element,
a second terminal portion (39) of the second guide (34), arranged according to a second direction or trajectory (40) different from the first direction or trajectory (37), the second terminal portion (39) being engaged with at least the third cursor borne by the bucket (50), for example comprising a revolving element;
and wherein at least the hinge element is provided for rotatably engaging the bucket to the rocker arm (51) for rotation about a horizontal tilting axis (60) such that a rise in the rocker arm (51) towards the upper zone causes engagement of the first cursor in the first terminal portion and the engagement of the third cursor in the second terminal portion with a consequent rotation of the loading chamber or bucket about the tilting axis (60).

13. The mixing tower of the preceding claim, wherein between the third cursor and the horizontal tilting axis (60) there is a distance of greater than 1000 mm, preferably greater than 1200 mm, and wherein the bucket (50) comprises a stop cooperating with an abutment profile defined on the rocker arm (51) for preventing a relative rotation between the bucket and the rocker arm beyond a predetermined angle.

14. The mixing tower of the preceding claim, wherein the first direction (37) of the first terminal portion (36) is substantially straight, preferably vertical, and wherein the second terminal portion (39) of the second guide (34) is configured in an arc, with an angular span of greater than 70°, preferably greater than 85°, and has a degree of curvature that is less than 1200mm, preferably less than 1000mm.

15. The mixing tower of any one of the preceding claims, exhibiting a coefficient of dimension which is greater than 4.0, optionally greater than 5.0; the coefficient of dimension being defined as a relation between the total height of the supporting structure (2) and the prevalent dimension in plan view thereof, taken as the greater of the longitudinal measurement of the rest base (4) and the measurement of the horizontal distance between the axis of the movement means (9) and the further end of the base (4) of the supporting structure (2).

16. A loading and lifting process, for production of conglomerates, in particular cement conglomerates or asphalt conglomerates, using a tower according to any one of the preceding claims, the process comprising following steps:
positioning the containing element at the base of the tower;
loading the containing element with aggregate material originating from a loading station located in proximity of the base (4);
vertically lifting the containing element along the operating pathway (8), up to when the containing element reaches a position above the mixer (201),
tilting the containing element such as to tip into the mixer (201) the aggregate material contained in the containing element;
moving towards the mixer and pour the water, cement and/or asphalt material,
mixing the aggregate material with the water, the cement material and/or the asphalt material such as to form cement conglomerate and/or asphalt conglomerate,
sending the cement conglomerate and/or the asphalt conglomerate towards the hopper (103).

17. A loading and lifting process; for production of conglomerates, in particular cement conglomerates or asphalt conglomerates, comprising:
at least a storage pit of aggregate material, such as for example sand and/or gravel,
at least a tower according to any one of the preceding claims, the base of which is arranged in the container in such a way that at least a portion of the supporting structure is arranged and extends internally of the pit, and wherein the containing element is mobile from a start position, in which the element is located at the base and entirely housed in the pit, towards an arrival position, in which the containing element is above the mixer,
at least a conveyor housed in the container for moving the aggregate material towards a load opening of the containing element.

## Patentansprüche

1. Mischturm zur Herstellung von Konglomeraten, insbesondere Zementkonglomeraten oder Asphaltkonglomeraten, umfassend:
ein Hebe- und Abladesystem (1), umfassend:
mindestens eine Trägerstruktur (2), die sich entlang einer vorwiegend vertikalen Entwicklungsrichtung (3) erstreckt und die eine Basis (4) und eine obere Zone (5) aufweist, die Trägerstruktur (2) weist eine Reihe von Pfosten auf, die sich vertikal von der Basis (4) aufwärts entwickeln, die obere Zone (5) definierend,
mindestens ein Behälterelement (6), beweglich in die obere Zone, um das Material zu laden,
mindestens ein erstes und ein zweites Zugelement (7, 7'), in Eingriff mit dem Behälterelement (6) und konfiguriert, um das Behälterelement (6) entlang eines vorbestimmten Betriebsweges (8) zu bewegen, der sich zwischen mindestens der Basis (4) und der oberen Zone (5) erstreckt, wobei der Betriebsweg (8) mindestens einen Trakt umfasst, der eine vertikale Entwicklung aufweist, die sich von der Basis (4) zur oberen Zone (5) hin erstreckt, und wobei das erste und zweite Zugelement (7, 7') jeweils eine längliche Gestalt aufweisen umfassend einen zweiten Bereich (7b) und
entweder jeder der zweiten Bereiche greift mit einem entsprechenden Gegengewicht ein, oder, alternativ,
beide der zweiten Bereiche greifen in das selbe Gegengewicht ein, und wobei mindestens ein erster und ein zweiter der Pfosten eine röhrenförmige Struktur aufweisen und jeweils das Gegengewicht (16), das mit dem ersten Zugelement (7) in Eingriff ist, und das Gegengewicht (16'), das mit dem zweiten Zugelement (7') in Eingriff ist, unterbringen und vertikal führen;
Bewegungsmittel (9), verbunden mit der Trägerstruktur (2), um den Zugelementen (7, 7') die Bewegung zu verleihen, Versatz des Behälterelements (6) entlang des Betriebsweges (8) ermöglichend, wobei die Bewegungsmittel (9) und die Zugelemente (7, 7') derart konfiguriert und gekoppelt sind, dass während der Bewegung des Behälterelements (6) die Bewegungsmittel (9) in aufeinanderfolgende Segmente (10) des Zugelements (7, 7') eingreifen und diese freigeben;
mindestens einen Mischer (201), der von der Trägerstruktur (2) getragen wird, wobei der Mischer (201) mindestens einen Behälterkörper (202) umfasst, mindestens einen Haupteinlass (203) zur Aufnahme des Materials vom Behälterkörper (6) wenn der Behälterkörper (6) in der oberen Zone über der Hauptöffnung ist, mindestens einen Hauptauslass (204) zum Abladen des Materials; und
mindestens einen Fülltrichter (103), der unter dem Mischer (201) liegt und der mindestens einen Einlass (205) in Fluidverbindung mit dem Hauptauslass (204) des Mischers (201) aufweist, mindestens einen Auslass (206), der Abladen von Material aus dem Fülltrichter (103) ermöglicht.

2. Mischturm nach Anspruch 1, wobei das erste und das zweite Zugelement (7, 7') sich auf Lageebenen erstrecken, die an lateral gegenüberliegenden Flanken der Trägerstruktur angeordnet sind und jeweils eine längliche Gestalt aufweisen, umfassend einen ersten Bereich (7a) in Eingriff mit dem Behälterelement (6), das entlang des Betriebsweges bewegt wird, um fortwährend in dem Raum angeordnet zu werden, der zwischen den Lageebenen des ersten und des zweiten Zugelements umfasst ist, vorzugsweise in einer zentrierten Position in Bezug auf die Zugelemente (7, 7').

3. Mischturm nach Anspruch 1 oder 2, wobei die Trägerstruktur (2) eine Mehrzahl von Pfosten (104) umfasst, die sich von der Basis zur oberen Zone hin entwickeln, verbunden durch eine Mehrzahl von Stangen, um einen netzartigen Rahmen zu bilden, der eine vertikale Entwicklung aufweist, wobei die Pfosten angeflanschte Längsbereiche umfassen, die lösbar aneinander gefügt sind, um eine Mehrzahl modularer Elemente zu bilden, die sich gegenseitig überlagernd lösbar miteinander verbunden sind, um die Trägerstruktur zu bilden, wobei die angeflanschten Längsbereiche jedes Moduls durch entsprechende Transversalstangen verbunden sind, die sich von den Stangen unterscheiden, die die angeflanschten Längsbereiche eines weiteren Moduls verbinden.

4. Mischturm nach einem der vorhergehenden Ansprüche, umfassend einen Trägerrahmen (218), fest an der Trägerstruktur (2) belegt und horizontal heraus- und hervorragend in Bezug auf die Trägerstruktur (2), wobei der Trägerrahmen den Mischer und den Fülltrichter trägt, um unterhalb des Fülltrichters einen Raum zu definieren, in den ein Transportfahrzeug eintreten kann, dass den Fülltrichter verlässt.

5. Mischturm nach einem der vorhergehenden Ansprüche, wobei jedes Zugelement (7, 7') eine entsprechende Kontaktzone (11, 11') mit den Bewegungsmitteln (9) definiert, wobei die Kontaktzone (11) des ersten Zugelements in einer lateral gegenüberliegenden Position und in Bezug auf die Kontaktzone (11') des zweiten Zugelements beabstandet angeordnet ist, und wobei sich jede der Kontaktzonen (11, 11') von einem entsprechenden Eingriffspunkt (13) zu einem entsprechenden Freigabepunkt (14) mit den Bewegungsmitteln (9) erstreckt und eine Oberfläche aufweist, die während der Bewegung des Behälterelements (6) im Wesentlichen konstant ist.

6. Mischturm nach einem der vorhergehenden Ansprüche, wobei die Kontaktzone (11, 11') jedes ersten und zweiten Zugelements (7, 7') sich über einen Trakt des entsprechenden Zugelements (7, 7') entwickelt, der zwischenliegend zwischen dem ersten und zweiten Bereich (7a, 7b) ist.

7. Mischturm nach einem der vorhergehenden Ansprüche, wobei die aufeinanderfolgenden Segmente (10) zwischenliegende Bereiche jedes ersten und zweiten Zugelements (7, 7'), umfasst zwischen dem ersten und zweiten Bereich (7a, 7b), definieren, und wobei jedes erste und zweite Zugelement eine Mehrzahl an Öffnungen (24) umfasst, die voneinander entlang der Längsentwicklung des Elements beabstandet sind, und optional wobei jedes des ersten und zweiten Zugelements (7, 7') eins aus der Gruppe umfasst:
mindestens eine Kette (25, 25'),
mindestens eine Schiene,
mindestens einen Zahnriemen.

8. Mischturm nach einem der vorhergehenden Ansprüche, wobei die Bewegungsmittel (9) umfassen:
mindestens einen Motor (19),
mindestens eine Getriebevorrichtung (20), verbunden mit dem Motor (19), um die Bewegung auf mindestens eine erste und eine zweite angetriebene Vorrichtung (21, 21') verbunden mit der Getriebevorrichtung (20) zu übertragen, und jede angeordnet in der oberen Zone auf einer entsprechenden gegenüberliegenden Flanke der Struktur (2), wobei die erste angetriebene Vorrichtung auf das erste Zugelement (7) wirkt und die zweite angetriebene Vorrichtung auf das zweite Zugelement (7') wirkt, und wobei der Motor (19) konfiguriert ist, um eine zirkuläre Bewegung auf die angetriebenen Vorrichtungen gemäß einer Hauptrotationsachse (22) zu übertragen, optional wobei die Getriebevorrichtung (20) mindestens eine Getriebewelle (27, 28) umfasst, die am Ende mit jeder angetriebenen Vorrichtung (21, 21') verbunden ist.

9. Mischturm nach dem vorhergehenden Anspruch, wobei jede der ersten und zweiten angetriebenen Vorrichtung (21, 21') mindestens ein entsprechendes gezahntes Kronrad (30) umfasst, vorzugsweise wobei jede der ersten und zweiten angetriebenen Vorrichtung (21, 21') durch ein einziges entsprechendes gezahntes Kronrad (30) definiert ist, das einen Durchmesser aufweist, umfasst zwischen 150 und 600 mm, unmittelbar mit dem entsprechenden Element des ersten und zweiten Zugelements (7, 7') verbunden, wobei jedes der gezahnten Kronräder (30) konfiguriert ist, um Bewegung vom Motor (19) aufzunehmen und die Bewegung an das entsprechende des ersten und zweiten Zugelements (7, 7') mittels Eingreifen von Zähnen jedes der Kronräder (30) in die Öffnungen, die im entsprechenden des ersten und zweiten Zugelements (7, 7') vorhanden sind, zu übertragen.

10. Mischturm nach einem der vorhergehenden Ansprüche von 6 bis 10, wobei ein Koeffizient des Gegengewichts, definiert als ein Verhältnis zwischen Gegenwiegen und dem Nettogewicht des gehobenen Materials, in einer Spanne von 0.1 und 2.0 umfasst ist, wobei das Gegenwiegen definiert ist als Differenz zwischen dem Gesamtgewicht der Gegengewichte (16, 16') und dem Gesamtgewicht des Behälterelements (6), optional wobei der Wert des Koeffizienten des Gegenwiegens größer als 0.4 ist.

11. Mischturm nach einem der vorhergehenden Ansprüche, wobei das Behälterelement (6) eine Ladeschaufel (50) und einen Schlepphebel (51) umfasst, der die Schaufel trägt und an der Seite des Behälterelements angeordnet ist, die der Trägerstruktur (2) zugewandt ist, wobei die Trägerstruktur an jeder Flanke mindestens eine erste Führung (33) und mindestens eine zweite Führung (34) umfasst, wobei jede erste Führung mindestens ein erstes und ein zweites Führungsstück (38a, 38b) aufnimmt, das an jeder Flanke des Schlepphebels (51) gehalten wird, und jede zweite Führung (34) mindestens ein drittes Führungsstück aufnimmt, das an jeder Flanke der Schaufel (50) gehalten wird, um eine Bewegung des Behälterelements (6) entlang des vorbestimmten Betriebsweges (8) zu ermöglichen.

12. Mischturm nach einem der vorhergehenden Ansprüche, umfassend mindestens ein Kippsystem (35), das in der oberen Zone (5) der Trägerstruktur (2) betrieben wird und auf das Behälterelement (6) wirkt, wobei das Kippsystem (35) an jeder Flanke der Trägerstruktur umfasst:
einen ersten Endbereich (36) der ersten Führung (33), angeordnet entlang einer ersten Richtung oder Bewegungsbahn (37), wobei der erste Endbereich (36) mit mindestens dem ersten Führungsstück (38) in Eingriff ist, zum Beispiel umfassend ein sich drehendes Element,
einen zweiten Endbereich (39) der zweiten Führung (34), angeordnet gemäß einer zweiten Richtung oder Bewegungsbahn (40), die sich von der ersten Richtung oder Bewegungsbahn (37) unterscheidet, wobei der zweite Endbereich (39) mit mindestens dem dritten Führungsstück, das von der Schaufel (50) gehalten wird, in Eingriff ist, zum Beispiel umfassend ein sich drehendes Element;
und wobei mindestens das Gelenkelement bereitgestellt ist, um die Schaufel drehbar mit dem Schlepphebel (51) in Eingriff zu bringen, zur Rotation um eine horizontale Kippachse (60), sodass ein Anheben des Schlepphebels (51) in Richtung der oberen Zone ein Eingreifen des ersten Führungsstücks in den ersten Endbereich und das Eingreifen des dritten Führungsstücks in den zweiten Endbereich bewirkt, mit einer folgenden Rotation der Ladekammer oder der Schaufel um die Kippachse (60).

13. Mischturm nach dem vorhergehenden Anspruch, wobei zwischen dem dritten Führungsstück und der horizontalen Kippachse (60) eine Entfernung von mehr als 1000 mm besteht, vorzugsweise mehr als 1200 mm, und wobei die Schaufel (50) einen Anschlag umfasst, der mit einem Widerlagerprofil zusammenwirkt, das auf dem Schlepphebel (51) definiert ist, um eine relative Rotation zwischen der Schaufel und dem Schlepphebel über einen vorbestimmten Winkel hinaus verhindert.

14. Mischturm nach dem vorhergehenden Anspruch, wobei die erste Richtung (37) des ersten Endbereichs (36) im Wesentlichen gerade, vorzugsweise vertikal, ist, und wobei der zweite Endbereich (39) der zweiten Führung (34) in einem Bogen konfiguriert ist, mit einer Winkelöffnung von größer als 70°, vorzugsweise größer als 85°, und einen Grad der Krümmung aufweist, der kleiner als 1200 mm ist, vorzugsweise kleiner als 1000 mm.

15. Mischturm nach einem der vorhergehenden Ansprüche, aufweisend einen Dimensionskoeffizienten, der größer ist als 4.0, optional größer als 5.0; wobei der Dimensionskoeffizient definiert ist als ein Verhältnis zwischen der Gesamthöhe der Trägerstruktur (2) und der vorherrschenden Dimension in Draufsicht, genommen als die größere der Längsmessung der Aufstandsbasis (4) und der Messung der horizontalen Entfernung zwischen der Achse der Bewegungsmittel und dem weiteren Ende der Basis (4) der Trägerstruktur (2).

16. Lade- und Hebeverfahren zur Herstellung von Konglomeraten, insbesondere Zementkonglomeraten oder Asphaltkonglomeraten, unter Verwendung eines Turms nach einem der vorhergehenden Ansprüche, das Verfahren umfassend die folgenden Schritte:
Positionieren des Behälterelements an der Basis des Turms;
Laden des Behälterelements mit einem Aggregatmaterial stammend von einer Ladestation, die sich in der Nähe der Basis (4) befindet;
vertikales Heben des Behälterelements entlang des Betriebsweges (8), aufwärts, bis das Behälterelement eine Position über dem Mischer (201) erreicht,
Kippen des Behälterelements, um in den Mischer (201) das Aggregatmaterial einzukippen, das im Behälterelement enthalten ist;
Bewegen auf den Mischer zu und Ausgießen des Wassers, Zement- und/oder Asphaltmaterials,
Mischen des Aggregatmaterials mit dem Wasser, dem Zementmaterial und/oder dem Asphaltmaterial, um Zementkonglomerat und/oder Asphaltkonglomerat zu bilden,
Schicken des Zementkonglomerats und/oder des Asphaltkonglomerats in Richtung des Fülltrichters (103).

17. Lade- und Hebeverfahren zur Herstellung von Konglomeraten, insbesondere Zementkonglomeraten oder Asphaltkonglomeraten, umfassend:
mindestens eine Lagergrube Aggregatmaterials, zum Beispiel Sand und/oder Kies,
mindestens einen Turm nach einem der vorhergehenden Ansprüche, dessen Basis im Behälter derart angeordnet ist, dass mindestens ein Teilbereich der Trägerstruktur innerhalb der Grube angeordnet ist und sich darin erstreckt, und wobei das Behälterelement beweglich ist, von einer Startposition, in der das Element sich an der Basis befindet und vollständig in der Grube untergebracht ist, in Richtung einer Zielposition, in der das Behälterelement über dem Mischer ist,
mindestens eine Fördervorrichtung, die im Behälter untergebracht ist, um das Aggregatmaterial in Richtung einer Ladeöffnung des Behälterelements zu bewegen.

## Revendications

1. Tour de mélange pour la production d'agglomérés, en particulier d'agglomérés au ciment ou d'agglomérés à l'asphalte, comprenant:
un système de levage et de déchargement (1) comprenant:
au moins une structure de support (2) qui s'étend le long d'une direction de développement principale verticale (3) et qui comporte une base (4) et une zone supérieure (5), la structure de support (2) comportant une série de montants qui se développent verticalement s'étendant depuis la base (4) vers le haut pour définir la zone supérieure (5),
au moins un élément conteneur (6), déplaçable sur la zone supérieure, pour charger les matériaux,
au moins un premier et un second élément de traction (7, 7') engagés avec l'élément conteneur (6) et configurés de manière à déplacer l'élément conteneur (6) le long d'un trajet fonctionnel prédéterminé (8) s'étendant entre au moins la base (4) et la zone supérieure (5), le trajet fonctionnel (8) comprenant au moins un tronçon ayant un développement vertical s'étendant depuis la base (4) vers la zone supérieure (5), et dans laquelle le premier et
le second élément de traction (7, 7') présentent chacun une conformation allongée comprenant et une seconde portion (7b) et
soit chacune des secondes portions est engagée avec un contrepoids respectif soit, en variante,
les deux secondes portions engagent un même contrepoids commun, et dans laquelle au moins un premier et un second des montants présentent une structure tubulaire et abritent et guident verticalement respectivement le contrepoids (16) engagé avec le premier élément de traction (7) et le contrepoids (16') engagé avec le second élément de traction (7');
des moyens de mouvement (9) associés avec la structure de support (2) de manière à imposer le mouvement sur les éléments de traction (7, 7'), permettant un déplacement de l'élément conteneur (6) le long du trajet fonctionnel (8), lesdits moyens de mouvement (9) et lesdits éléments de traction (7, 7') étant configurés et couplés de telle manière que pendant un mouvement de l'élément conteneur (6) lesdits moyens de mouvement (9) engagent et libèrent des segments successifs (10) de l'élément de traction (7, 7');
au moins un mélangeur (201) porté par la structure de support (2), le mélangeur (201) comprenant au moins un corps de conteneur (202), au moins une entrée générale (203) pour recevoir les matériaux depuis le corps de conteneur (6) quand le corps de conteneur (6) est dans la zone supérieure au-dessus de l'ouverture générale, au moins une sortie générale (204) pour le déchargement des matériaux ; et
au moins une trémie (103) au-dessous du mélangeur (201) et présentant au moins une entrée (205) en connexion fluidique avec la sortie générale (204) du mélangeur (201), et au moins une sortie (206) qui permet le déchargement des matériaux hors de la trémie (103).

2. Tour de mélange selon la revendication 1, dans laquelle le premier et le second élément de traction (7, 7') s'étendent sur des plans agencés sur des flancs latéralement opposés de la structure de support et présentent chacun une conformation allongée comprenant une première portion (7a) engagée avec l'élément conteneur (6) qui est déplacé le long du trajet fonctionnel de manière à être agencée constamment dans l'espace compris entre les plans du premier et du second élément de traction, de préférence dans une position centrée par rapport aux éléments de traction (7, 7').

3. Tour de mélange selon la revendication 1 ou 2, dans laquelle la structure de support (2) comprend une pluralité de montants (104), qui se développent depuis la base jusqu'à la zone supérieure, interconnectés par une pluralité de barres pour former un cadre réticulaire ayant un développement vertical, les montants comprenant des portions longitudinales à brides réunies de façon amovible de manière à former une pluralité d'éléments modulaires connectés de façon démontable et en superposition mutuelle pour former la structure de support, les portions longitudinales à brides de chaque module étant connectées par des barres transversales respectives, distincte des barres qui connectent les portions longitudinales à brides d'un autre module.

4. Tour de mélange selon l'une quelconque des revendications précédentes, comprenant un cadre de support (218) contraint de façon rigide sur la structure de support (2) et émergeant horizontalement en se projetant par rapport à la structure de support (2), le cadre de support supportant le mélangeur et la trémie de manière à définir, en partie inférieure de la trémie, un espace auquel un véhicule de transport sortant de la trémie peut accéder.

5. Tour de mélange selon l'une quelconque des revendications précédentes, dans laquelle chaque élément de traction (7, 7') définit une zone de contact respective (11, 11') avec les moyens de mouvement (9), la zone de contact (11) du premier élément de traction étant agencée dans une position latéralement opposée et à distance par rapport à la zone de contact (11') du second élément de traction, et dans laquelle chacune des zones de contact (11, 11') s'étend depuis un point d'engagement respectif (13) jusqu'à un point de libération respectif (14) avec les moyens de mouvement (9) et présente une superficie qui est sensiblement constante pendant le mouvement de l'élément conteneur (6).

6. Tour de mélange selon l'une quelconque des revendications précédentes, dans laquelle
ladite zone de contact (11, 11') de chacun du premier et du second élément de traction (7, 7') se développe sur un tronçon de l'élément de traction respectif (7, 7') qui est intermédiaire entre la première et la seconde portion (7a, 7b).

7. Tour de mélange selon l'une quelconque des revendications précédentes, dans laquelle les segments successifs (10) définissent des portions intermédiaires de chacun du premier et du second élément de traction (7, 7') comprises entre la première et la seconde portion (7a, 7b), et dans laquelle chacun du premier et du second élément de traction comprend une pluralité d'ouvertures (24), à distance les unes des autres le long du développement longitudinal de l'élément, et en option dans laquelle chacun dudit premier et dudit second élément de traction (7, 7') comprend un élément parmi un groupe comprenant :
au moins une chaîne (25, 25'),
au moins une crémaillère,
au moins une courroie crantée.

8. Tour de mélange selon l'une quelconque des revendications précédentes, dans laquelle les moyens de mouvement (9) comprennent :
au moins un moteur (19),
au moins un organe de transmission (20), connectés au moteur (19) de manière à transmettre le mouvement d'au moins un premier et un second organe entraîné (21, 21') connecté à l'organe de transmission (20) et agencé chacun à la zone supérieure sur un flanc respectif opposé de la structure (2), le premier organe entraîné étant actif sur le premier élément de traction (7) et le second organe entraîné étant actif sur le second élément de traction (7'), et dans laquelle le moteur (19) est configuré de manière à transmettre un mouvement circulaire aux organes entraînés en accord avec l'axe de rotation principal (22), et en option dans laquelle l'organe de transmission (20) comprend au moins un arbre de transmission (27, 28) connecté de façon terminale à chaque organe entraîné (21, 21').

9. Tour de mélange selon la revendication précédente, dans laquelle chacun du premier et du second organe entraîné (21, 21') comprend au moins une roue à couronne crantée respective (30), de préférence dans laquelle chacun du premier et du second organe entraîné (21, 21') est défini par une unique roue crantée respective (30) ayant un diamètre compris entre 150 et 600 mm, connectée directement à l'élément respectif du premier et du second élément de traction (7, 7'), chacune desdites roues à couronne crantée (30) étant configurée de manière à recevoir un mouvement depuis le moteur (19) et à transmettre le mouvement à l'élément respectif parmi le premier et le second élément de traction (7, 7') au moyen de l'engagement de crans de chacune des roues à couronne (30) dans les ouvertures présentes dans l'élément respectif parmi le premier et le second élément de traction (7, 7').

10. Tour de mélange selon l'une quelconque des revendications précédentes 6 à 10, dans laquelle un coefficient de contrepoids, défini comme un rapport entre le contrepoids et le poids net du matériau soulevé, est compris dans une plage entre 0,1 et 2,0, dans laquelle le contrepoids est défini comme étant la différence entre le poids total des contrepoids (16, 16') et le poids total de l'élément conteneur (6), et en option dans laquelle la valeur du coefficient de contrepoids est plus grande que 0,4.

11. Tour de mélange selon l'une quelconque des revendications précédentes, dans laquelle l'élément conteneur (6) comprend un godet de chargement (50) et un bras de basculement (51) qui supporte le godet et agencé sur le côté de l'élément conteneur (2) en face de la structure de support (2), la structure de support comprenant, sur chaque flanc, au moins un premier guide (33) et au moins un second guide (34), chaque premier guide recevant au moins un premier et un second curseur de guidage (38a, 38b) portés sur chaque flanc du bras de basculement (51), et chaque second guide (34) recevant au moins un troisième curseur de guidage porté sur chaque flanc par le godet (50), de manière à permettre un mouvement de l'élément conteneur (6) le long du trajet fonctionnel prédéterminé (8).

12. Tour de mélange selon l'une quelconque des revendications précédentes, comprenant au moins un système de basculement (35) en fonctionnement à la zone supérieure (5) de la structure de support (2) et agissant sur l'élément conteneur (6), dans laquelle le système de basculement (35) comprend, sur chaque flanc de la structure de support :
une première portion terminale (36) du premier guide (33), agencée le long d'une première direction ou trajectoire (37), la première portion terminale (36) étant engagée au moins avec le premier curseur (38), comprenant par exemple un élément tournant,
une seconde portion terminale (39) du second guide (34), agencée en accord avec une seconde direction ou trajectoire (40) différente de la première direction ou trajectoire (37), la seconde portion terminale (38) étant engagée au moins avec le troisième curseur porté par le godet (50), comprenant par exemple un élément tournant ;
et dans laquelle au moins un élément d'articulation est prévu pour engager en rotation le godet sur le bras de basculement (51) en vue d'une rotation autour d'un axe de basculement horizontal (60), de telle façon qu'une montée dans le bras de basculement (51) vers la zone supérieure provoque un engagement du premier curseur dans la première portion terminale et un engagement du troisième curseur dans la seconde portion terminale avec une rotation consécutive de la chambre de chargement ou du godet autour d'un axe de basculement (60).

13. Tour de mélange selon la revendication précédente, dans laquelle il existe, entre le troisième curseur et l'axe de basculement horizontal (60), une distance plus grande que 1000 mm, de préférence plus grande que 1200 mm, et dans laquelle le godet (50) comprend un arrêt coopérant avec un profil de butée défini sur le bras de basculement (51) pour empêcher une rotation relative entre le godet et le bras de basculement au-delà d'un angle prédéterminé.

14. Tour de mélange selon la revendication précédente, dans laquelle la première direction (37) de la première portion terminale (36) est sensiblement droite, de préférence verticale, et dans laquelle la seconde portion terminale (39) du second guide (34) est configurée suivant un arc, avec une couverture angulaire plus grande que 70°, de préférence plus grande que 85°, et présente un degré de courbure qui est inférieur à 1200 mm, de préférence inférieur à 1000 mm.

15. Tour de mélange selon l'une quelconque des revendications précédentes, présentant un coefficient dimensionnel supérieur à 4,0 et en option supérieur à 5,0 ; le coefficient dimensionnel étant défini comme une relation entre la hauteur totale de la structure de support (2) et la dimension principale de celle-ci dans une vue en plan, prise comme étant la plus grande parmi la mesure longitudinale de la base de repos (4) et la mesure de la distance horizontale entre l'axe du moyen de mouvement (9) et l'autre extrémité de la base (4) de la structure de support (2),

16. Procédure de chargement et de levage, pour la production d'agglomérés, en particulier d'agglomérés au ciment ou d'agglomérés à l'asphalte, utilisant une tour selon l'une quelconque des revendications précédentes, le procédé comprenant les étapes suivantes:
on positionne l'élément conteneur à la base de la tour;
on charge l'élément conteneur avec des matériaux en agrégats provenant d'une station de chargement située à proximité de la base (4);
on soulève verticalement l'élément conteneur le long du trajet fonctionnel (8), jusqu'à ce que l'élément conteneur atteigne une position au-dessus du mélangeur (201),
on bascule l'élément conteneur de manière à déverser dans le mélangeur (201) les matériaux en agrégats contenus dans l'élément conteneur;
on déplace vers le mélangeur et vers l'eau, le matériau à base de ciment et/ou le matériau à base d'asphalte,
on mélange les matériaux en agrégats avec l'eau, le matériau à base de ciment et/ou le matériau à base d'asphalte de manière à former un aggloméré au ciment et/ou un aggloméré à l'asphalte,
on envoie l'aggloméré au ciment et/ou l'aggloméré à l'asphalte vers la trémie (103).

17. Procédé de chargement et de levage, pour la production d'agglomérés, en particulier d'agglomérés au ciment ou d'agglomérés à l'asphalte, comprenant:
au moins un réservoir de stockage de matériau en agrégats, comme par exemple du sable et/ou du gravier,
au moins une tour selon l'une quelconque des revendications précédentes, dont la base est agencée dans le conteneur de telle manière qu'au moins une portion de la structure de support est agencée et s'étend à l'intérieur du réservoir, et dans lequel l'élément conteneur est mobile depuis une position de départ dans laquelle l'élément est situé à la base et entièrement logé dans le réservoir, vers une position d'arrivée dans laquelle l'élément conteneur est au-dessus du mélangeur, et
au moins un convoyeur abrité dans le conteneur pour déplacer le matériau en agrégats vers une ouverture de chargement de l'élément conteneur.
